Europäisches Patentamt

European Patent Office

Office européen des brevets

(11) Veröffentlichungsnummer: **0 589 916 B1**

(12) **EUROPÄISCHE PATENTSCHRIFT**

(45) Veröffentlichungstag der Patentschrift: **15.03.95**

(51) Int. Cl.6: **B60K 41/26**, F16H 61/00

(21) Anmeldenummer: **92910650.8**

(22) Anmeldetag: **21.05.92**

(86) Internationale Anmeldenummer:
**PCT/EP92/01137**

(87) Internationale Veröffentlichungsnummer:
**WO 93/00229 (07.01.93 93/02)**

(54) **VERFAHREN ZUR STEUERUNG EINES STUFENLOSEN GETRIEBES EINES KRAFTFAHRZEUGS.**

(30) Priorität: **21.06.91 DE 4120589**

(43) Veröffentlichungstag der Anmeldung:
**06.04.94 Patentblatt 94/14**

(45) Bekanntmachung des Hinweises auf die
Patenterteilung:
**15.03.95 Patentblatt 95/11**

(84) Benannte Vertragsstaaten:
**DE ES FR GB IT SE**

(56) Entgegenhaltungen:
**EP-A- 0 038 083
EP-A- 0 373 865
DE-A- 3 615 961
DE-A- 3 731 487
DE-A- 3 922 051**

(73) Patentinhaber: **Dr.Ing.h.c. F. Porsche Aktiengesellschaft
Porschestrasse 42
D-70435 Stuttgart (DE)**

(72) Erfinder: **SEIDEL, Willi
Theodor-Heuss-Strasse 101
D-7147 Eberdingen-Hochdorf (DE)**
Erfinder: **PETERSMANN, Joseph
Eichenweg 6
D-7251 Wimsheim (DE)**

EP 0 589 916 B1

## Beschreibung

Die Erfindung betrifft ein Verfahren nach der Gattung des Hauptanspruchs, das als bekannt gelten kann.

Übliche automatische Getriebesteuerungen von mit Brennkraftmaschinen angetriebenen Kraftfahrzeugen leiten beim Zurücknehmen des Fahrpedals in der Regel eine Verkleinerung der Übersetzung ein. Bei Kurvenfahrten oder beim Bremsen ist dies jedoch nicht immer erwünscht, da derartige Lastwechsel u. U. zu unsicheren Fahrzuständen führen können, oder beim Wiederbeschleunigen des Kraftfahrzeuges durch verstärktes Gasgeben eine Vergrößerung der Übersetzung erzwungen werden muß.

Aus der DE- 33 41 652 C2 ist es in diesem und im Zusammenhang mit selbsttätig geschalteten Stufengetrieben bekannt geworden, diese Verkleinerung der Übersetzung (Hochschaltungen) in Kurven durch Erfassen der Querbeschleunigung des Kraftfahrzeuges zu vermeiden. Hierdurch kann jedoch lediglich ein Schalten in Kurven vermieden werden.

Um auch bereits beim Heranfahren an Kurven eine Verkleinerung der Übersetzung gezielt verhindern zu können, wird bei dem Verfahren zur Steuerung eines selbsttätig schaltenden Getriebes nach der DE- 39 22 040 A1 die Fahrpedaländerungsgeschwindigkeit erfaßt und bei Unterschreiten eines bestimmten (negativen) Grenzwerts ein Signal zur Unterbindung eines Hochschaltvorgangs abgeleitet, sofern Schubbetrieb erkannt wird. Daraufhin werden Hochschaltungen unterbunden, bis wiederum Zugbetrieb auftritt und ein festgelegter Zeitraum verstrichen ist.

In der DE- 39 22 051 A1 ist zusätzlich vorgesehen, diesen Zeitraum von einem weiteren Parameter (Fahraktivität) abhängig zu machen, der aus einem oder einer Kombination von mehreren Betriebs- bzw. Fahrparametern eines Kraftfahrzeugs abgeleitet wird und einen Fahrstil eines Fahrers oder eine gerade vorherrschende Verkehrssituation bewertet.

Schließlich ist aus der DE 37 31 487 A1 eine Übersetzungssteuerung für ein kontinuierlich variables Getriebe eines Kraftfahrzeuges bekannt, die ein Herunterschalten beim Betätigen der Kraftfahrzeugbremse für einen vorbestimmten Zeitraum verhindert, wenn eines der gebremsten Räder blokkiert.

Ausgehend von diesem Stand der Technik ist es Aufgabe der Erfindung, ein Verfahren zur Steuerung eines vorzugsweise elektro-hydraulisch betätigten stufenlosen Getriebes für ein Kraftfahrzeug zu schaffen, das insbesondere bezüglich des Verhaltens der Einstellung des Übersetzungsverhältnisses oder der Motordreghzahl beim Bremsen weiter verbessert wird.

Die Aufgabe wird erfindungsgemäß durch die kennzeichnenden Merkmale des Anspruchs 1 gelöst. Weitere, die Erfindung ausgestaltende Merkmale sind in den Unteransprüchen enthalten.

Die Vorteile der Erfindung sind in erster Linie darin zu sehen, daß ein Verfahren zur Steuerung eines vorzugsweise elektro-hydraulisch betätigten stufenlosen Getriebes für ein Kraftfahrzeug geschaffen ist, bei dem das Einstellverhalten des Übersetzungsverhältnisses beim Bremsen insbesondere vor Kurven weiter verbessert ist.

Hierbei wird beim Bremsen bei Vorliegen bestimmter unkritischer Bedingungen selbsttätig eine Vergrößerung der Übersetzung mit endlicher dritter Geschwindigkeit durchgeführt werden, wobei auch hier wiederum die Verstellgeschwindigkeit kleiner als die maximale Verstellgeschwindigkeit ist.

Die Einhaltung der Bedingungen gewährleistet dabei einen sicheren Betrieb des Kraftfahrzeugs. So wird insbesondere überwacht, daß die Querbeschleunigung nicht zu hoch ist, das Fahrzeug nicht zu stark verzögert und die Fahrgeschwindigkeit nicht zu hoch ist, um einen Verlust insbesondere der Längs- und Seitenführungskräfte der Räder des Kraftfahrzeugs zu vermeiden. Das sich nach einer Vergrößerung der Übersetzung verstärkt auf die Antriebsräder auswirkende Bremsmoment der Antriebs- (Brennkraft-) Maschine kann sich daher nicht negativ auf das Fahrverhalten des Kraftfahrzeugs auswirken.

Das Vergrößern der Übersetzung beim Bremsen wird vorzugsweise dann eingeleitet, wenn ein Zustand einer Übersetzungsfesthaltung aktiv ist.

Dieser wird in bekannter Weise aktiviert, wenn das Kraftfahrzeug an eine Kurve heranfährt und der Fahrer das Fahrpedal nicht mehr betätigt.

Durch das Vergrößern der Übersetzung beim Bremsen wird einerseits die Bremswirkung der Antriebsmaschine des Kraftfahrzeugs im Schubbetrieb verstärkt, so daß die Bremse (Betriebsbremse) des Kraftfahrzeugs entlastet wird. Andererseits wird im Zusammenhang mit einer Festhaltung der Übersetzung vor, in und nach Kurven erreicht, daß dem Fahrer nach Durchfahren einer Kurve immer die für ein Wiederbeschleunigen des Kraftfahrzeugs optimale Übersetzung beziehungsweise Motordrehzahl zur Verfügung steht.

Die Erfindung wird nachstehend anhand der in den Zeichnungen dargestellten Ausführungsformen erläutert.

Es zeigt:

Fig. 1  ein Blockschaltbild einer elektro-hydraulischen Steuerung für ein stufenloses Getriebe eines Kraftfahrzeuges,

Fig. 2  eine Schar von mehreren Steuerkennlinien, die Werten der Drosselklappenstellung bestimmte Werte von Motordrehzahl-Sollwerten zuordnen,

Fig. 3     eine Grenzkennlinie zur Erkennung von Zug-/Schubbetrieb,

Fig. 4     eine erste und eine zweite fahrgeschwindigkeitsabhängige Grenzinie für eine Querbeschleunigung,

Fig. 5     ein Kennfeld für einen motordrehzahl- und übersetzungsabhängigen Kennfeldwert,

Fig. 6     ein Kennfeld für einen übersetzungs- und fahraktivitätsabhängigen Faktor und

Fig. 7     eine Kennlinie, die die Abhängigkeit von Zeiträumen von einer Fahraktivität zeigt.

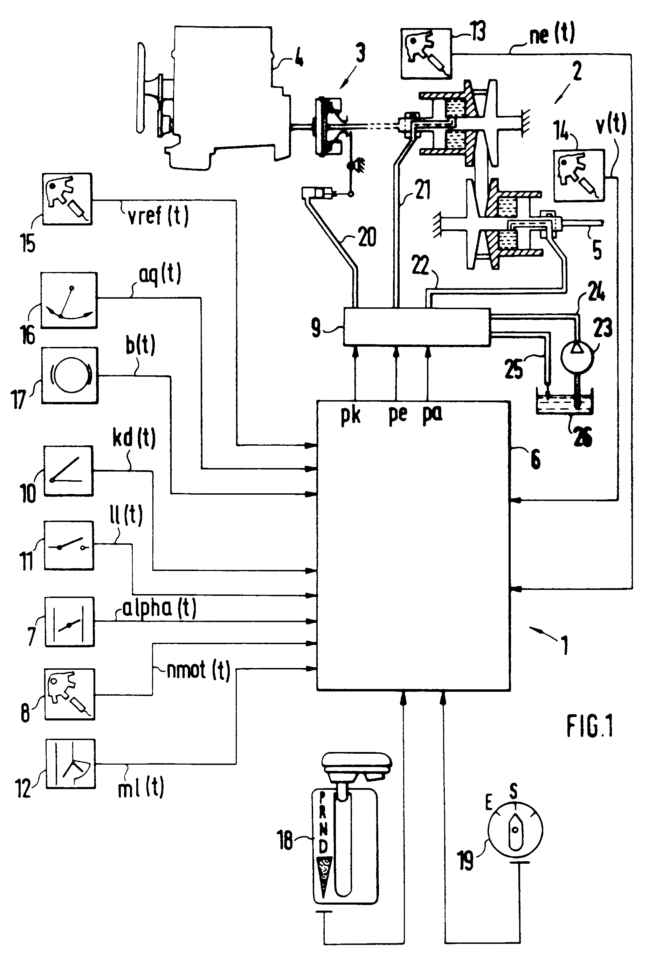

In **Fig. 1** ist mit 1 eine Steuerung eines elektrohydraulisch betätigten stufenlosen Getriebes 2 am Beispiel eines Umschlingungsgetriebes gezeigt. Das stufenlose Getriebe 2 wird über eine steuerbare Anfahrkupplung 3 von einer Brennkraftmaschine 4 angetrieben. Eine Abtriebswelle 5 des stufenlosen Getriebes 2 ist mit einem nicht gezeigten Radantrieb eines Kraftfahrzeugs verbunden.

Nachfolgend sind Signale oder Größen, die sich mit der Zeit t ändern, als Funktionen der Zeit f(t) dargestellt.

Ein Steuergerät 6 steuert wenigstens in Abhängigkeit von der - ohne Beschränkung der Allgemeinheit - Drosselklappenstellung alpha(t) eines Drosselklappenwinkelgebers 7 und einer Motordrehzahl nmot(t) eines Motordrehzahlgebers 8 der Brennkraftmaschine 4 einen Hydraulik-Ventilblock 9 an. Selbstverständlich kann anstatt der Stellung der Drosselklappe auch die Stellung eines jeden, die Antriebsleistung einer Antriebsmaschine des Kraftfahrzeugs beeinflussenden Organs (Leistungssteuerorgan), wie z. B. eines Fahrpedals oder eines Einspritzpumpenhebels einer selbstzündenden Diesel- Brennkraftmaschine oder das Ausgangssignal eines elektrischen oder elektronischen Fahrpedals erfaßt und verarbeitet werden.

Zur Steuerung des stufenlosen Getriebes 2 und der Anfahrkupplung 3 erhält das Steuergerät 6 als weitere Eingangsgrößen oder Meßgrößen ein Kickdown-Signal kd(t) eines Kick-down-Schalters 10, ein Leerlaufsignal 11(t) eines Leerlaufschalters 11, die Luftmenge bzw. Luftmasse ml(t) eines Luftmengen- bzw. Luftmassengebers 12 sowie die Getriebeeingangsdrehzahl ne(t) eines Getriebeeingangsdrehzahlgebers 13 und eine Fahrgeschwindigkeit v-(t) eines Fahrgeschwindigkeitgebers 14 des Kraftfahrzeugs. Zusätzlich werden eine Geschwindigkeit vref(t) eines Referenzgeschwindigkeitgebers 15 an einer nicht gezeigten Fahrzeugachse, eine Querbeschleunigung aq(t) eines Querbeschleunigungsgebers 16 und ein Bremssignal b(t) eines Bremssignalgebers 17 erfaßt und vom Steuergerät 6 verarbeitet.

Schließlich ist die Steuerung üblicherweise vom Fahrzeugführer über einen Wählhebel 18 zur Vorwahl von Fahrstufen: P (Parksperre), R (Rückwärtsgangstufe), N (Leergangstufe) und D (selbsttätige Einstellung des Übersetzungsverhältnisses ue des stufenlosen Getriebes) beeinflußbar; ferner ist ein Einstellbereich des Wählhebels 18 zur direkten Vorgabe des Übersetzungsverhältnisses ue vorgesehen.

Bei üblichen Getriebesteuerungen wird schließlich über einen Programmwählschalter 19 die Steuerkennlinie, nach der das Steuergerät 1 in der Fahrstufe D das stufenlose Getriebe steuert, ausgewählt. Es sind hierbei in der Regel zwei Steuerkennlinien auswählbar, wobei in der Stellung E eine verbrauchsoptimierte Steuerkennlinie RKL1 und in der Stellung S eine leistungsoptimierte Steuerkennlinie RKL5 manuell einstellbar sind.

Alternativ zum Programmwählschalter 19 kann auch im Steuergerät 6 ein Steuerverfahren implementiert sein, das beispielsweise entsprechend der DE 33 48 652 C2 oder der DE 39 22 051 A1 den Fahrstil eines Fahrers oder dessen verkehrssituationsbedingtes Handeln in Bezug auf die Steuerung des Kraftfahrzeugs bewertet und eine Fahraktivität SK(t) (Fahrpedalaktivität) aus einer oder mehreren Betriebs- bzw. Fahrparametern ableitet. Auf der Basis dieser Fahraktivität SK(t) kann dann, entsprechend einer Schaltstellung des Programmwählschalters 19, eine von mehreren Steuerkennlinien $RKLj = f(SK(t))$; (j = 1, 2, ..., 5) zur Steuerung des stufenlosen Getriebes bzw. der Anfahrkupplung 3 herangezogen werden.

In Abhängigkeit von den genannten Größen steuert das Steuergerät 6 über einen Signalausgang pk und den Ventilblock 9 den Hydraulikdruck in der Anfahrkupplung 3 sowie über die Signalausgänge pe und pa und den Hydraulikventilblock 9 das Übersetzungsverhältnis ue zwischen der Getriebeeingangsdrehzahl ne(t) und der Getriebeausgangsdrehzahl (Fahrgeschwindigkeit) v(t) an. Das Übersetzungsverhältnis ue(t) ist hierbei proportional zum Quotienten aus der Getriebeeingangsdrehzahl ne(t) und der Fahrgeschwindigkeit v(t): $ue(t) = prop^* (ne(t)/v(t))$; prop ist hierbei ein Proportionalfaktor. Eine zahlenmäßige Vergrößerung / Verkleinerung des Übersetzungsverhältnisses ue(t) bedeutet hierbei eine Übersetzung ins Kurze / Lange.

Der Hydraulikventilblock 9 verbindet hierzu die entsprechenden Steuerleitungen 20, 21 und 22 der Anfahrkupplung 3 und des stufenlosen Getriebes 2 mit einer an eine Pumpe 23 angeschlossenen Druckleitung 24 oder eine Rücklaufleitung 25 zu einem Vorratsbehälter 26 für Hydraulikflüssigkeit.

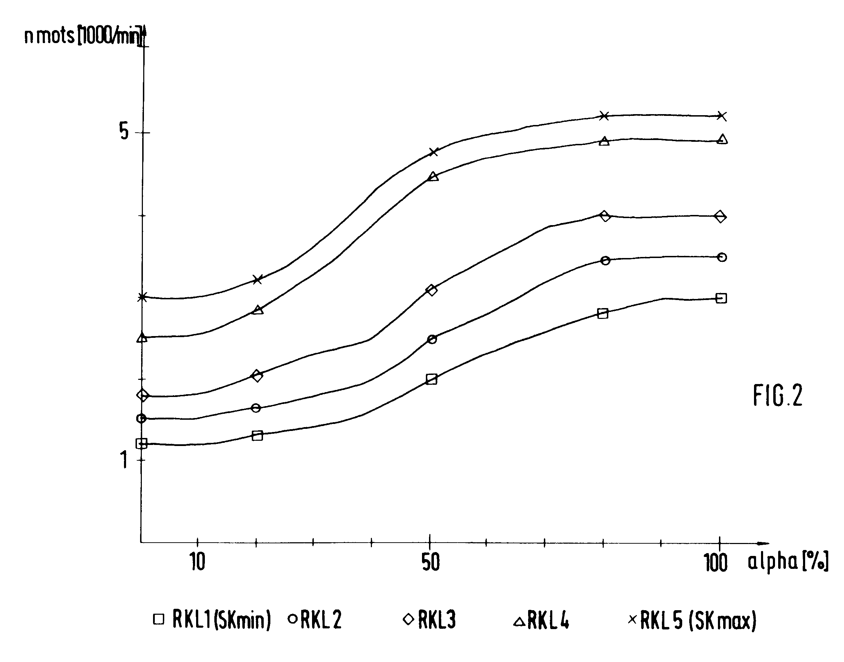

Zur Steuerung des stufenlosen Getriebes 2 wird die Übersetzung ue des Getriebes mittelbar über das Steuergerät 6 und den Ventilblock 9 über die Steuerkennlinien RKLj wenigstens in Abhängigkeit von der Drosselklappenstellung alpha(t) und der Motordrehzahl n(t) selbsttätig eingestellt; die Steuerkennlinie RKLj wird hierbei entsprechend der Schalterstellung des Programmwählschalters 19 oder der den Fahrstil des Fahrers oder dessen verkehrssituationsbedingtes Handeln in Bezug auf die Steuerung des Kraftfahrzeugs bewertenden Fahraktivität SK(t) aus einer Schar von mehreren Steuerkennlinien RKLj (j = 1, 2, ..., 5) entsprechend **Fig. 2** ausgewählt.

Ohne Beschränkung der Allgemeinheit können zur Steuerung des Getriebes auch andere Größen herangezogen werden und die Steuerkennlinien zu Kennlinenfeldern oder Kennfeldern ausgeweitet werden.

Die in der **Fig. 2** gezeigten Steuerkennlinien decken hierbei den Bereich zwischen einer Steuerkennlinie RKL1, die einen verbrauchsoptimierten Betrieb des Fahrzeugs ermöglicht (Stellung "E" des Programmwählschalters), und einer Steuerkennlinie RKL5, mit welcher das Kraftfahrzeug leistungsoptimiert betrieben werden kann (Stellung "S" des Programmwählschalters 19), zumindest schrittweise ab.

Sofern die Steuerung die Auswahl der Steuerkennlinien RKLj entsprechend der Fahraktivität SK(t) vornimmt, stellt sich die Steuerung des stufenlosen Getriebes 2 selbsttätig auf die Fahrweise des Fahrers ein, so daß ein manueller Eingriff bzw. eine Umstellung der Steuerkennlinien nicht vorgenommen werden muß.

Die Übersetzung ue des stufenlosen Getriebes 2 wird durch das Steuergerät 6 bevorzugt derart eingestellt, daß die Motordrehzahl nmot(t) einem Motordrehzahl-Sollwert nmots möglichst optimal nachgeführt wird. Hierzu kann im Steuergerät 6 ein unterlagerter Drehzahlregler implementiert sein. Die Übersetzung ue ist somit eine Funktion des Motordrehzahl-Sollwerts nmots, der Motordrehzahl nmot und der Zeit t: ue = f(nmots, nmot, t). Eine Abweichung Dnmot(t) = nmots(t)-nmot(t) der Motordrehzahl nmot(t) vom Motordrehzahl-Sollwert nmots(t) wird gegen 0 geführt.

Der augenblickliche Wert des Motordrehzahl-Sollwerts nmots wird hierbei über die augenblicklich angewählte Steuerkennlinie RKLj gemäß **Fig. 2** aus dem augenblicklichen Wert der Drosselklappenstellung alpha(t) und der Fahraktivität SK(t) ermittelt: nmots = RKLj(alpha, SK(t)).

Wie der **Fig. 2** zu entnehmen ist, weisen die Steuerkennlinien RKLj im wesentlichen in einem unteren Wertebereich der Drosselklappenstellung alpha einen progressiven Verlauf auf, der in einem mittleren Bereich der Drosselklappenstellung alpha in einen degressiven Verlauf übergeht. Die Drosselklappenstellung alpha ist auf der horizontalen Achse in Prozent aufgetragen, wobei der Wert 0 % der geschlossenen Drosselklappe und der Wert 100 % der voll geöffneten Drosselklappe entspricht.

Es sind fünf Steuerkennlinien RKL1, RKL2, RKL3, RKL4 und RKL5 eingetragen, wobei die Steuerkennlinie RKL1 den verbrauchsoptimierten Betrieb des Kraftfahrzeugs ermöglicht und bei minimaler Fahraktivität SK(t) = SKmin angewählt wird. Die Steuerkennlinie RKL5 wird bei maximaler Fahraktivität SK(t) = SKmax ausgewählt, bei der der leistungsoptimierte Betrieb des Kraftfahrzeugs möglich ist.

Entsprechend der DE 33 41 652 C2 oder der DE 39 22 051 A1 wird die Fahraktivität SK(t) durch einen den Fahrstil des Fahrers oder dessen verkehrssituationsbedingtes Handeln längerfristig bewertenden funktionellen Zusammenhang aus zyklisch oder antizyklisch erfaßten aktuellen und vergangenen Werten einer einzigen Betriebskenngröße oder zu einer einzigen aus mehreren Betriebsgrößen eines Kraftfahrzeugs zusammengesetzten Größe ermittelt.

Hierbei werden beispielsweise Werte der Drosselklappenstellung alpha(t), der Fahrgeschwindigkeit v(t) und der Querbeschleunigung aq(t) im Sekunden- bzw. Millisekundenbereich erfaßt und daraus weitere Werte, wie z.B. die Drosselklappenänderungsgeschwindigkeit dalpha(t)/dt und die Beschleunigung des Fahrzeugs dv(t)/dt berechnet. Die ermittelten und berechneten Werte werden über Kennfelder mit weiteren Betriebsgrößen verknüpft und über einen funktionellen Zusammenhang zu einer Zwischengröße zusammengesetzt, aus der durch gleitende Mittelwertbildung, die sowohl die neu berechneten Werte als auch die vergangenen Werte längerfristig berücksichtigt, eine Fahraktivität SK(t) ermittelt.

Über einen weiteren funktionellen Zusammenhang wird dieser Fahraktivität SK(t) schließlich, z.B. entsprechend der in der DE 39 22 051 A1 gezeigten Weise, eine Steuerkennlinie RKLj zugeordnet.

Es ist insbesondere wünschenswert, daß eine bei Getrieben dieser Bauart übliche Verkleinerung der Übersetzung vermieden wird, wenn das Fahrzeug sich beispielsweise einer Kurve nähert und der Fahrer vom Fahrpedal geht.

Wie schon in der DE- 39 22 040 A1 und der DE- 39 22 051 A1 gezeigt, kann eine derartige Kurvenerkennung stattfinden, indem man die zeitliche Änderung der Drosselklappenstellung dalpha-(t)/dt abtastet. In der Regel nimmt nämlich ein Fahrer vor einer Kurve das Fahrpedal - und hiermit in der Regel auch die Drosselklappe - schneller zurück als er es unter normalen Umständen tut, um beispielsweise die Fahrgeschwindigkeit zu reduzieren.

Eine bei Zurücknahme der Fahrpedalstellung bzw. bei unbetätigtem Fahrpedal von üblichen Getriebesteuerungen vorgenommene Verkleinerung der Übersetzung ue wird gemäß einer ersten Variante des erfindungsgemäßen Verfahrens verhindert, d. h. die augenblickliche Übersetzung wird festgehalten, solange der Zustand einer Übersetzungsfesthaltung usf aktiv ist, usf = 1.

Alternativ hierzu wird die Übersetzung (ue) gemäß einer zweiten Variante des erfindungsgemäßen Verfahrens zumindest solange mit einer ersten bestimmten endlichen und relativ langsamen Geschwindigkeit (erste zeitliche Änderung der Übersetzung ck1 = due/dt = f(SK(t))) bis zu demjenigen Wert der Übersetzung ue, der zum Erreichen des im augenblicklichen Betriebspunkt des Kraftfahrzeugs (alpha(t), v(t), nmot(t), t) in der augenblicklich eingestellten Steuerkennlinie RKLj vorgesehenen Motordrehzahl- Sollwerts nmots(t) erforderlich ist, verstellt, wie der Zustand einer Übersetzungsfesthaltung usf aktiv ist: usf = 1.

Als weitere Alternative hierzu wird gemäß einer dritten Variante des Steuerverfahrens die Übersetzung ue zumindest solange, wie der Zustand einer Übersetzungsfesthaltung usf aktiv ist, derart verstellt, daß die Motordrehzahl nmot konstant bleibt, oder daß sich die Motordrehzahl nmot(t) mit einer zweiten bestimmten endlichen und relativ langsamen Geschwindigkeit (zweite zeitliche Änderung der Motordrehzahl nk2 = dnmot/dt = f(SK(t))) bis zu demjenigen Wert eines Motordrehzahl- Sollwerts nmots(t), der im augenblicklichen Betriebspunkt des Kraftfahrzeugs (alpha(t), v(t), nmot(t), t) in der augenblicklich eingestellten Steuerkennlinie RKLj vorgesehen ist, vermindert.

Bei allen drei Varianten geht der Zustand der Übersetzungsfesthaltung in den aktiven Zustand über usf = 1, wenn eine zeitliche Änderung dalpha(t)/dt der Drosselklappenstellung alpha(t) einen negativen Grenzwert -alphag unterschreitet und Schubbetrieb erkannt wird; der Zustand der Übersetzungsfesthaltung usf geht nach Ablauf eines ersten Zeitraums T1(SK(t)) in den inaktiven Zustand über usf = 0, wenn Zugbetrieb erkannt wird.

Bei den Begriffen Zugbetrieb und Schubbetrieb kommt es auf das betrachtete System an. Hierbei kann unterschieden werden:

- Gesamtsystem Kraftfahrzeug: Unter Zugbetrieb ist die Beschleunigung des Kraftfahrzeuges (zeitliche Änderung der Fahrgeschwindigkeit) dv(t)/dt>0 zu verstehen, während der Schubbetrieb einer Verzögerung des Kraftfahrzeugs entspricht dv(t)/dt<0.
- System Kupplung/Getriebe: Bei Zugbetrieb ist die Eingangsdrehzahl des Systems Kupplung (Drehmomentwandler)/Getriebe größer als dessen Ausgangsdrehzahl, während bei Schubbetrieb die Eingangsdrehzahl kleiner als die Ausgangsdrehzahl ist.
- System Brennkraftmaschine: Zugbetrieb bedeutet Drosselklappenstellung alpha(t)>0 und zeitliche Änderung der Motordrehzahl dnmot-

(t)/dt>0, während im Schubbetrieb die Drosselklappenstellung alpha(t) = 0 oder die zeitliche Änderung der Motordrehzahl dnmot(t)/dt<0 ist.

Bezüglich der Getriebesteuerung und damit auch dem Gesamtverhalten des Kraftfahrzeugs hat es sich sinnvoll erwiesen, die Begriffe Zugbetrieb und Schubbetrieb folgendermaßen nachzubilden:

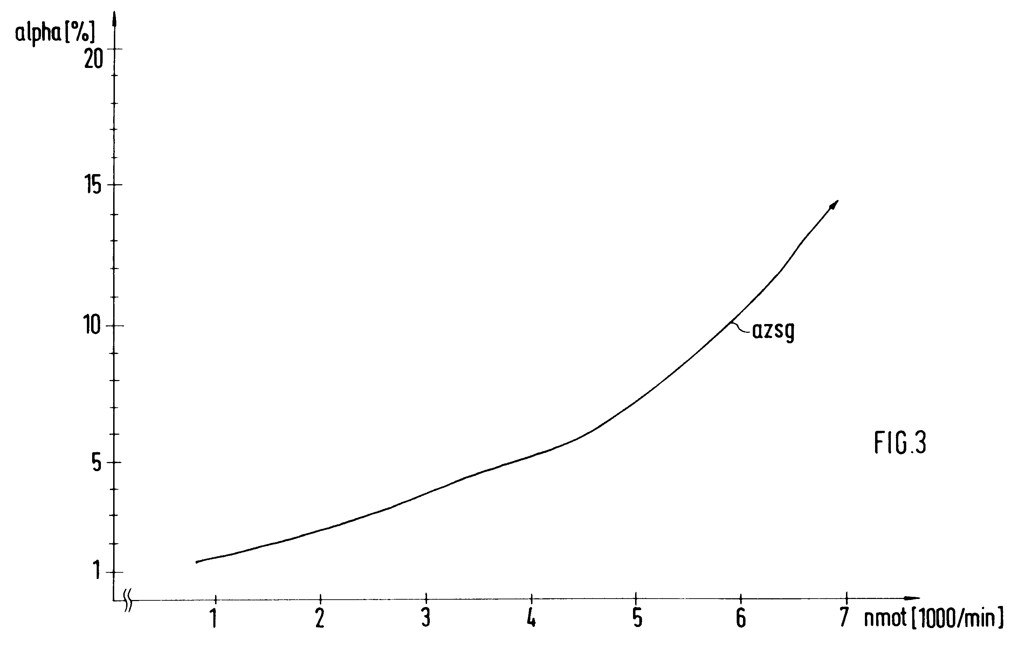

- Schubbetrieb wird erkannt, wenn die Drosselklappenstellung alpha(t) unter eine motordrehzahlabhängige Grenzkennlinie azsg(nmot), wie sie in **Fig. 3** gezeigt ist, fällt:

  alpha(t)<azsg(nmot).

- Zugbetrieb wird erkannt, wenn sowohl die Drosselklappenstellung alpha(t) die motordrehzahlabhängige Grenzkennlinie azsg(nmot) nach **Fig. 3** überschreitet, als auch die zeitliche Änderung der Fahrgeschwindigkeit dv(t)/dt positive Werte annimmt: alpha(t)->azsg(nmot) ∩ dv(t)/dt>0).

Auf die so festgelegten Begriffe für Zug- und Schubbetrieb wird stets Bezug genommen.

Entsprechend der Erfindung verharrt die Übersetzungsfesthaltung usf auf dem aktiven Zustand, usf = 1, sofern während des Ablaufs des ersten Zeitraums T1(SK(t)) erneut Schubbetrieb erkannt wird; die Übersetzungsfesthaltung usf = 1 bleibt hierbei solange aktiv, bis wiederum Zugbetrieb erkannt wird und ein zweiter Zeitraum T2(SK(t)) verstrichen ist.

In weiterer Ausgestaltung der Erfindung erfolgt die mit Ablauf des ersten oder zweiten Zeitraums T1(SK(t)), T2(SK(t)) eingeleitete Verkleinerung der Übersetzung ue stufenloser Getriebe mit einer dritten bestimmten endlichen und relativ langsamen Geschwindigkeit (zeitliche Änderung der Übersetzung ck3 = due/dt = f(SK(t))), wobei die Verstellung der Übersetzung ue bis zu demjenigen Wert erfolgt, der zum Erreichen des beim augenblicklichen Betriebspunkt in der augenblicklich eingestellten Steuerkennlinie RKLj vorgesehenen Motordrehzahl- Sollwert nmots(t) erforderlich ist.

Der Betrag der ersten Geschwindigkeit ck1 ist vorzugsweise kleiner als der Betrag der dritten Geschwindigkeit ck3: |ck1|<|ck3|; letzterer wiederum sollte hierbei kleiner als die maximale Verstellgeschwindigkeit der Übersetzung des Getriebes sein.

Nach der dritten Variante des Steuerverfahrens erfolgt eine mit Ablauf des ersten oder zweiten Zeitraums T1(SK(t)), T2(SK(t)) eingeleitete Absenkung der Motordrehzahl nmot(t) mit einer vierten bestimmten endlichen und relativ langsamen Geschwindigkeit (zeitliche Änderung der Motordrehzahl nk4 = dnmot/dt = f(SK(t))) bis zu demjenigen Wert der Motordrehzahl nmot, der beim augenblicklichen Betriebspunkt in der augenblicklich eingestellten Steuerkennlinie RKLj vorgesehen ist.

Der Betrag der zweiten Geschwindigkeit nk2 ist vorzugsweise kleiner als der Betrag der vierten Geschwindigkeit nk4: $|nk2|<|nk4|$.

Gemäß der Erfindung wird - vorzugsweise bei aktiver Übersetzungsfesthaltung usf = 1 - eine Vergrößerung der Übersetzung ue mit einer fünften bestimmten endlichen Geschwindigkeit (zeitliche Änderung der Übersetzung cg5 = due/dt = f(SK(t))) bis zu demjenigen Wert der Übersetzung ue vorgenommen, der zum Erreichen der beim augenblicklichen Betriebspunkt in der augenblicklich eingestellten Steuerkennlinie RKLj maximal möglich (ohne daß die Brennkraftmaschine unzulässige Drehzahlen annimmt und dadurch möglicherweise Schaden nimmt) ist.

Hierzu muß sowohl
- eine Betriebsbremse des Kraftfahrzeugs betätigt sein:
  Bremssignal b = 1,
  oder alternativ dazu oder ergänzend die zeitliche Änderung der Fahrgeschwindigkeit dv(t)/dt kleiner als ein erster negativer Längsbeschleunigungs- Grenzwert albg(ue, nmot, t), mit albg(ue, nmot, t)<0 sein:

  dv(t)/dt<albg(ue, nmot, t),

  als auch
- eine mittels des Querbeschleunigungssensors 16 verfaßte Querbeschleunigung aq(t) unterhalb einer ersten fahrgeschwindigkeitsabhängigen Querbeschleunigungs- Grenzlinie aqg1(v(t)) liegen:

  aq(t)<aqg1(v(t)),

  als auch
- die zeitliche Änderung der Fahrgeschwindigkeit dv(t))/dt größer als ein zweiter negativer Längsbeschleunigungs-Grenzwert albbg(nmot, ue, SK(t), t) = k(ue, SK(t))*albg(ue, nmot, t) sein:

  dv(t)/dt>albbg(nmot, ue,SK(t), t) = k(ue, SK(t))*albg(ue, nmot, t),

  als auch
- die Fahrgeschwindigkeit v(t) unterhalb eines Fahrgeschwindigkeits-Grenzwerts vg(ue, SK(t)) liegen:

  v(t)<vg(ue, SK(t)).

Die Vergrößerung der Übersetzung erfolgt bis zu demjenigen Wert der Übersetzung, der im augenblicklichen Betriebspunkt des Kraftfahrzeugs in der augenblicklich eingestellten Steuerkennlinie RKLj zulässig ist.

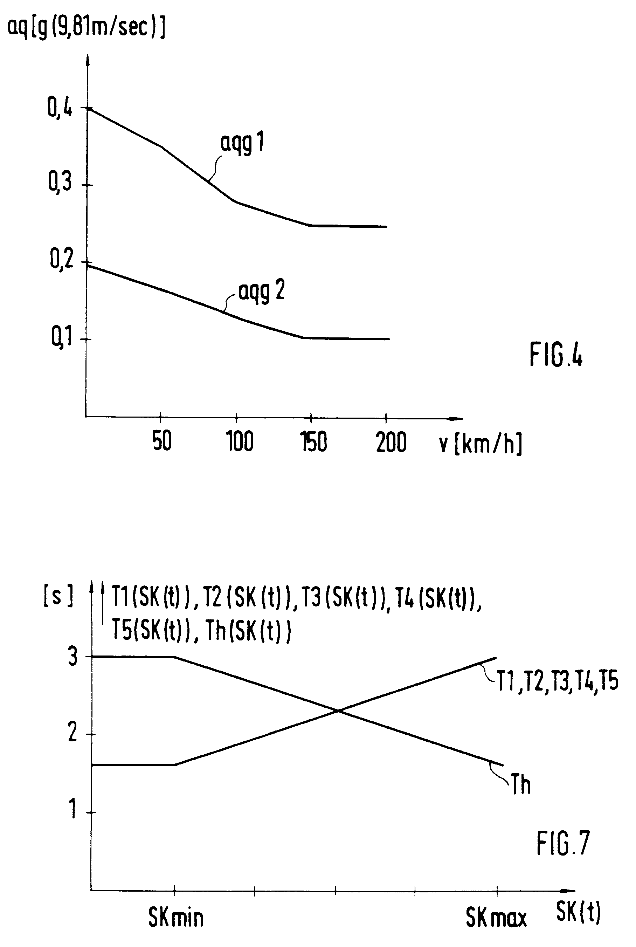

Die Querbeschleunigungs- Grenzlinie aqg1(v(t)) ist hierbei vorzugsweise fahrgeschwindigkeitsabhängig. Eine entsprechende Kennlinie ist in **Fig. 4** dargestellt. Sie berücksichtigt, daß die Übersetzung ue nur dann vergrößert wird, wenn die Querbeschleunigung des Kraftfahrzeugs nicht zu hoch ist.

Der erste negative Längsbeschleunigungs- Grenzwert albg(ue, nmot, t) ist von den augenblicklichen Werten der Übersetzung ue und der Motordrehzahl nmot(t) abhängig und entspricht hierbei der jeweiligen (negativen) Längsbeschleunigung dv/dt (und damit der Verzögerung) des in definiertem Zustand (Beladung, Reifenluftdruck, Umweltbedingungen usw.) auf ebener Fahrbahn rollenden Kraftfahrzeugs bei geschlossener Drosselklappe alpha = 0, bei den jeweiligen Wertepaaren der augenblicklich eingestellten Übersetzung ue und der Motordrehzahl nmot(t).

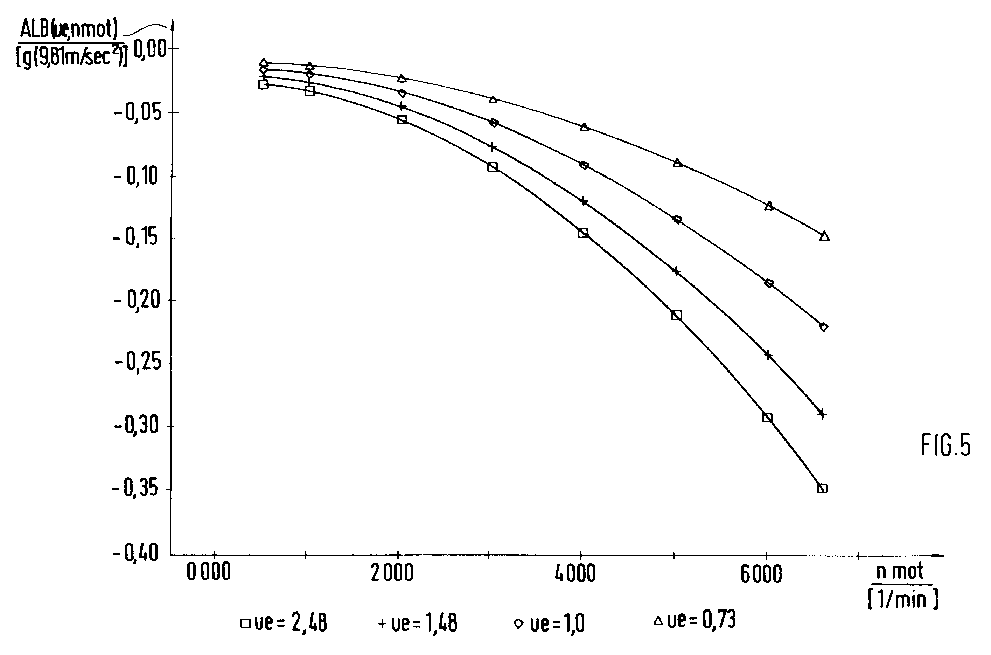

Der erste negative Längsbeschleunigungs- Grenzwert albg(ue, nmot, t) wird aus den Augenblickswerten dieser Größen bevorzugt über ein erstes Kennfeld ALB(ue, nmot) ermittelt: albg(ue, nmot, t) = ALB(ue, nmot). Ein Beispiel für ein derartiges erstes Kennfeld ALB(ue, nmot) ist in **Fig. 5** abgebildet. Hierin sind beispielhaft vier übersetzungsabhängige Kennlinien, die bestimmten Werten der Motordrehzahl nmot (in Umdrehungen pro Minute) bestimmte Kennfeldwerte ALB(ue, nmot) in der Einheit g entsprechend 9,81... Meter pro Sekunde$^2$ (Erdbeschleunigung) zuweisen, dargestellt.

Als Übersetzungen sind die Werte 2,48 - 1,48 - 1,0 - 0,73 aufgetragen. Zur Ermittlung von Kennfeldwerten des -fahrzeugspezifischen- Kennfelds, die von den dargestellten (Übersetzungs-) Kennlinien abweichen, kann in bekannter Weise entweder übersetzungsabhängig interpoliert oder extrapoliert werden. Alternativ hierzu kann selbstverständlich die Ermittlung der Längsbeschleunigungs- Grenzwerte albg(g, nmot, t) auch über einen entsprechenden funktionellen Zusammenhang erfolgen.

Die Kennlinien nach **Fig. 5** zeigen deutlich die Abhängigkeit der Verzögerungswerte eines Kraftfahrzeugs mit Brennkraftmaschine von der Übersetzung ue und der Motordrehzahl nmot(t). Für wachsende Werte der Motordrehzahl nmot(t) werden die Verzögerungswerte größer durch die sich verstärkende Motorbremswirkung und den sich erhöhenden Rollwiderstand (Luftwiderstand) des Fahrzeugs. Ebenso steigen die Verzögerungswerte mit größer werdender Übersetzung ue, da sich das Bremsmoment der Brennkraftmaschine aufgrund der höheren Übersetzung verstärkt auf die Verzögerungsrate des Kraftfahrzeugs auswirkt.

Der zweite negative Längsbeschleunigungs-Grenzwert albbg(nmot, ue, SK(t)) = = k(ue, SK(t))-*albg(ue, nmot, t) wird gemäß einem Produkt aus einem übersetzungsabhängigen Faktor k(ue, SK(t)) und einem bei den augenblicklichen Betriebsbedingungen des Kraftfahrzeugs bestimmten Wert des ersten negativen Längsbeschleunigungs- Grenzwerts albg(ue, nmot, t) ermittelt.

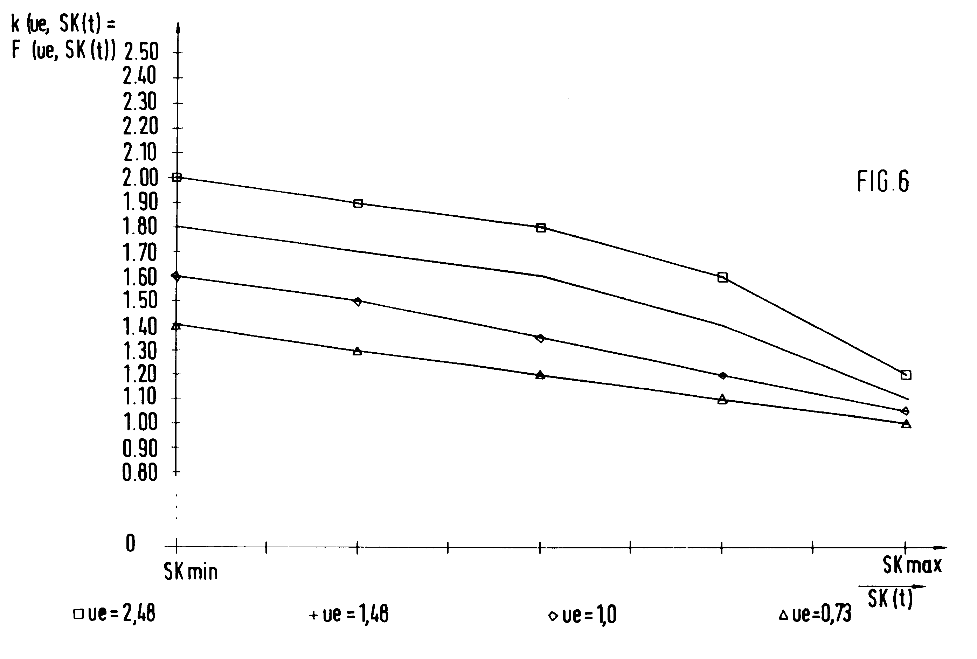

Der übersetzungsabhängige Faktor k(ue, SK(t)) wird über ein zweites Kennfeld k(ue, SK(t)) = F(ue, SK(t)) aus der augenblicklichen Übersetzung ue ermittelt. Ein Beispiel für das zweite Kennfeld ist der **Fig. 6** zu entnehmen. Hierbei weisen wiederum übersetzungsabhängige Kennlinien (Übersetzungswerte 2,48 - 1,48 - 1,0 - 0,73) Werten der Fahraktivität SK(t) dimensionslose Werte des Faktors k(ue, SK(t)) zu; die für hiervon abweichende Werte der Übersetzung ue gültigen Kennfeldwerte können wiederum durch Interpolation beziehungsweise Extrapolation aus den vorhandenen Werten errechnet werden.

Der Fahrgeschwindigkeits- Grenzwert vg(ue, SK(t), t) hängt von der Übersetzung ue und der Fahraktivität SK(t) ab.

Die Wirkung der einzelnen Verfahrensschritte erklärt sich wie folgt:

- Durch Überwachen der Betätigung der Betriebsbremse des Kraftfahrzeugs (Bremssignal b = 1), oder alternativ oder ergänzend hierzu, durch Prüfen, ob die zeitliche Änderung der Fahrgeschwindigkeit dv(t)/dt unterhalb des ersten negativen Längsbeschleunigungs- Grenzwerts albg(g, nmot) liegt, dv(t)/dt<albg(g, nmot), wird der Fahrerwunsch nach verstärktem Verzögern des Fahrzeugs beziehungsweise nach Rückschaltung abgeleitet.

- Durch Prüfen, ob die Querbeschleunigung aq(t) unterhalb der ersten bestimmten Querbeschleunigungs- Grenzlinie aqg1(v(t)) liegt, wird überwacht, ob sich das Fahrzeug nicht bereits in einer - relativ engen oder schnell befahrenen - Kurve befindet. Liegt bereits eine derartige Kurvenfahrt vor, so wird die Rückschaltung unterbunden, damit nicht durch die sich sonst erhöhende Bremswirkung der Kraftschluß zwischen Rad und Fahrbahn verloren geht.

- Eine vergleichbare Sicherheitsfunktion stellt die Überwachung des Überschreitens des zweiten negativen Längsbeschleunigungs- Grenzwerts albbg(nmot, g, SK(t)) dar: Hierbei wird ermittelt, ob die durch die Vergrößerung der Übersetzung ue zu erwartende höhere Verzögerung des Kraftfahrzeugs nicht zu einem Überschreiten der Haftreibungsgrenze der Räder führen würde.

Hierzu wird aus der beim augenblicklichen Fahrzustand zu erwartenden Verzögerung durch Gewichtung (Multiplikation) mit dem übersetzungsabhängigen Faktor k(ue, SK(t)) eine augenblicklich maximal zulässige Verzögerung ermittelt und diese mit der augenblicklichen Fahrzeugverzögerung dv(t)/dt verglichen; ist die augenblickliche Verzögerung höher, wird eine Vergrößerung der Übersetzung unterbunden.

Der übersetzungsabhängige Faktor k(ue, SK(t)) berücksichtigt hierbei, daß der zweite negative Längsbeschleunigungs- Grenzwert albbg (ue, nmot, t) kleiner als der erste negative Längsbeschleunigungs- Grenzwert albg(ue, nmot, t), also betragsmäßig größer (entsprechend einer höheren Verzögerungsrate) sein muß.

- Mit der Überwachung des Überschreitens des übersetzungsabhängigen Fahrgeschwindigkeits- Grenzwerts vg(ue, SK(t), t) können weitere Sicherheitskriterien bezüglich einer Vergrößerung der Übersetzung bei zu hoher Fahrgeschwindigkeit oder das Verhindern des Überschreitens von Drehzahlgrenzen der antreibenden Brennkraftmaschine nach Erhöhen der Übersetzung erfüllt werden. Diese Sicherheitskriterien sind stark fahrzeugspezifisch und müssen daher individuell an jedes Fahrzeug angepaßt werden, so daß sich die Darstellung eines entsprechenden Kennfelds erübrigt.

Um auch nach dem Heranfahren an Kurven oder dem Anbremsen vor Kurven eine ungewollte Verstellung der Übersetzung ue während der Kurvenfahrt zu vermeiden, wird die Querbeschleunigung des Fahrzeugs überwacht. In einer ersten Alternative wird die Verstellung der Übersetzung ue vermieden oder die Zeiträume T1(SK(t)) und T2(SK(t)) werden zu Null gesetzt, sofern der Betrag der Querbeschleunigung (|aq(t)|) eine von der Fahrgeschwindigkeit v(t) abhängige zweite und niedrigere Querbeschleunigungs-Grenzlinie aqg2(v(t)) nach **Fig. 4** überschreitet bzw. solange nach Unterschreiten der zweiten Querbeschleunigungs-Grenzlinie aqg2(v(t)) ein dritter Zeitraum T3(SK(t)) noch nicht verstrichen ist.

In einer zweiten Alternative wird die Übersetzung (ue) zumindest solange mit einer sechsten bestimmten endlichen und relativ langsamen Geschwindigkeit (sechste zeitliche Änderung der Übersetzung ck6 = due/dt = f(SK(t))) bis zu demjenigen Wert der Übersetzung ue, der zum Erreichen des im augenblicklichen Betriebspunkt des Kraftfahrzeugs (alpha(t), v(t), nmot(t), t) in der augenblicklich eingestellten Steuerkennlinie RKLj vorgesehenen Motordrehzahl- Sollwert nmots erforderlich ist, verstellt, wie der Betrag der Querbeschleunigung |aq(t)| die zweite Querbeschleunigungs- Grenzlinie aqg2(v(t)) nach **Fig. 4** überschreitet, bzw. solange nach Unterschreiten der zweiten Querbeschleunigungs- Grenzlinie aqg2(v(t)) ein vierter Zeitraum T4(SK(t)) noch nicht verstrichen ist.

Die nach Ablauf des dritten Zeitraums T3(SK(t)) oder vierten Zeitraums T4(SK(t)) eingeleitete Verkleinerung der Übersetzung (ue) erfolgt mit einer siebten bestimmten endlichen und relativ langsamen Geschwindigkeit (siebte zeitliche Änderung der Übersetzung ck7 = due/dt = f(SK(t))) bis zu demjenigen Wert der Übersetzung ue, der zum Erreichen des beim augenblicklichen Betriebspunkt in der augenblicklich eingestellten Steuerkennlinie RKLj vorgesehenen Motordrehzahl- Sollwerts nmots(t) erforderlich ist.

Der Betrag der sechsten Geschwindigkeit (sechste zeitlichen Änderung der Übersetzung ck6 = due/dt) ist hierbei kleiner als der Betrag der siebten Geschwindigkeit (siebte zeitlichen Änderung der Übersetzung ck7 = due/dt): |ck6|<|ck7|.

Der Betrag |ck7| der siebten Geschwindigkeit (siebte zeitlichen Änderung der Übersetzung ck7) ist hierbei bevorzugt kleiner als die maximal mögliche Verstellgeschwindigkeit der Übersetzung des Getriebes.

Durch die Steuerung entsprechend der zweiten Alternative wird die Übersetzung des Getriebes während der Kurvenfahrt relativ langsam verkleinert, so daß die Motordrehzahl relativ konstant und damit in dem vom Fahrer gewünschten Bereich (zum Beispiel im Bereich des höchsten Drehmoments) bleibt. Erfolgt nach Beendigung der Kurvenfahrt kein Übergang in den Zugbetrieb oder verstreicht der Zeitraum T4(SK(t)), so wird die Motordrehzahl nmot(t) durch geeignetes Verstellen der Übersetzung ue des Getriebes relativ rasch auf den eigentlichen Motordrehzahl- Sollwert nmots(t) aus der Steuerkennlinie RKLj hingeführt.

In einer dritten Alternative wird, solange der Betrag |aq(t)| der Querbeschleunigung aq(t) die zweite Querbeschleunigungs- Grenzlinie aqg2(v(t)) nach **Fig. 4** überschreitet, bzw. solange nach Unterschreiten der zweiten Querbeschleunigungs- Grenzlinie aqg2(v(t)) der vierte Zeitraum noch nicht verstrichen ist, die Übersetzung ue des Getriebes derart eingestellt, daß die Motordrehzahl nmot(t) konstant gehalten, oder sich mit einer achten bestimmten Geschwindigkeit nk8(SK(t)) (achte zeitliche Änderung nk8 = dnmot/dt = f(SK(t)) der Motordrehzahl nmot(t)) vermindert.

Die Übersetzung ue wird während bzw. nach der Kurvenfahrt konstant gehalten, sobald die Motordrehzahl nmot(t) denjenigen Wert des Motordrehzahl-Sollwerts nmots(t) erreicht hat, der im augenblicklichen Betriebspunkt des Kraftfahrzeugs in der augenblicklich eingestellten Steuerkennlinie RKLj vorgesehen ist.

Weiter wird eine Verstellung der Übersetzung ue vermieden und/oder die Zeiträume T1(SK(t)), T2(SK(t)), T3(SK(t)), T4(SK(t)) zu Null gesetzt, sofern der Betrag der Querbeschleunigung |aq(t)| eine von der Fahrgeschwindigkeit v(t) abhängige erste Querbeschleunigungs- Grenzlinie aqg1 = f(v(t)) überschreitet, bzw. solange nach Unterschreiten der ersten Querbeschleunigungs- Grenzlinie aqg1(v(t)) ein fünfter Zeitraum T5(SK(t)) noch nicht verstrichen ist. Damit können Übersetzungsverstellungen bei extremer Kurvenfahrt vermieden werden.

Ferner wird noch eine Verstellung der Übersetzung ue, insbesondere jedoch eine Vergrößerung der Übersetzung, vermieden und/oder die Zeiträume T1(SK(t)), T2(SK(t)), T3(SK(t)), T4(SK(t)) und T5(SK(t)) zu Null gesetzt, sofern an wenigstens einem der Räder des Kraftfahrzeugs übermäßiger Radschlupf auftritt oder der Kraftschluß zwischen wenigstens einem Rad des Kraftfahrzeugs und der befahrenen Fahrbahn unterbrochen ist.

Hierbei wird eine Verstellung der Übersetzung, insbesondere jedoch im Sinne einer Vergrößerung, nur dann zugelassen, wenn eine Differenzgeschwindigkeit Dv(t) = vref(t)-v(t) zwischen einer Geschwindigkeit vref(t) einer nicht angetriebenen Achse und der an einer angetriebenen Achse erfaßten Fahrgeschwindigkeit v(t) einen zulässigen Differenzgeschwindigkeitswert Dvzul(SK(t)) nicht überschreitet: Dv(t)<Dvzul(SK(t)).

Ebenso kann zum Abbau übermäßigen Radschlupfs bei Überschreiten des zulässigen Differenzgeschwindigkeitswerts Dvzul(SK(t))

- eine Wandlerüberbrückungskupplung eines mit einem Drehmomentwandler ausgestatteten Getriebes geöffnet werden,
- eine Haltezeit Th(SK(t)) gesetzt wird, während der eine Vergrößerung der Übersetzung ue nicht unterbunden werden kann,
- die eingestellte Übersetzung ue zumindest bis zu einem zulässigen Wert verkleinert wird und
- eine Vergrößerung der Übersetzung ue verhindert wird,

wobei diese Funktionen wieder zurückgesetzt werden, wenn Zugbetrieb erkannt wird und positive Werte der zeitlichen Änderung der Fahrgeschwindigkeit dv(t)/dt vorliegen.

Die Zeiträume T1(SK(t)), T2(SK(t)), T3(SK(t)), T4(SK(t)), T5(SK(t)) und Th(SK(t)) können sowohl von gleicher als auch unterschiedlicher Zeitdauer sein. In vorteilhafter Weise sind wenigstens einer der Zeiträume T1(SK(t)), T2(SK(t)), T3(SK(t)), T4-(SK(t), T5(SK(t)), Th(SK(t)) oder wenigstens der Fahrgeschwindigkeits- Grenzwert vg(ue, Sk(t), t) oder der übersetzungsabhängige Faktor k(ue, SK(t)) oder wenigstens die erste, zweite, dritte, vierte, fünfte, sechste, siebte oder achte Geschwindigkeit ck1, nk2, ck3, nk4, cg5, ck6, ck7, nk8 zur Vergrößerung oder Verkleinerung der Übersetzung ue(t) beziehungsweise der Motordrehzahl nmot(t) oder der zulässige Differenzgeschwindigkeitswert Dvzul-(SK(t) oder willkürlich einstellbar und werden vorzugsweise zusammen mit einer Einstellung der Steuerkennlinien RKLj (verbrauchsoptimiertes Fahrprogramm, Steuerkennlinie RKL1; leistungsoptimiertes Fahrprogramm, Steuerkennlinie RKL5) derart eingestellt, daß bei mehr leistungoptimierten Fahrprogrammen (Steuerkennlinie RKL5) die Zeiträume T1(SK(t)), T2(SK(t))), T3(SK(t)), T4(SK(t)), T5(SK(t)), die fünfte Geschwindigkeit cg5 und der Grenzwert vg(g, SK(t), t) größer werden, und die Haltezeit Th(SK(t)), die Geschwindigkeiten ck1, nk2, ck3, nk4, ck6, ck7 und nk8, der gangstufenabhängige Faktor k(g-1, SK(t)) und der zulässige Differenzgeschwindigkeitswert Dvzul(SK(t)) kleiner werden.

Sieht die Getriebesteuerung dagegen eine selbsttätige Anpassung der Steuerkennlinien (RKLj) entsprechend der den Fahrstil des Fahrers oder dessen verkehrssituationsbedingtes Handeln in Bezug auf die Steuerung des Kraftfahrzeugs längerfristig bewertenden Fahraktivität (SK(t)) vor, so hängen wenigstens einer der Zeiträume T1(SK(t)), T2-(SK(t)), T3(SK(t)), T4(SK(t), T5(SK(t)), Th(SK(t)) oder wenigstens der Fahrgeschwindigkeits-Grenzwert vg(ue, Sk(t), t) oder der übersetzungsabhängige Faktor k(ue, SK(t)) oder wenigstens die erste, zweite, dritte, vierte, fünfte, sechste, siebte oder achte Geschwindigkeit ck1, k2, ck3, nk4, cg5, ck6, ck7, nk8 zur Verkleinerung oder Vergrößerung der Übersetzung ue(t) beziehungsweise der Motordrehzahl nmot(t) oder der zulässige Differenzgeschwindigkeitswert Dvzul(SK(t)) bevorzugt von der Fahraktivität SK(t) ab. Mit wachsender, mehr leistungsorientierter Fahraktivität SK(t) werden die Zeiträume T1(SK(t)), T2(SK(t)), T3(SK(t)), T4(SK(t)), T5-(SK(t)), die fünfte Geschwindigkeit cg5 und der Grenzwert vg(g, SK(t), t) größer und die Haltezeit Th(SK(t)), die Geschwindigkeiten ck1, nk2, ck3, nk4, ck6, ck7 und nk8, der gangstufenabhängige Faktor k(g-1, SK(t)) und der zulässige Differenzgeschwindigkeitswert Dvzul(SK(t)) kleiner.

## Patentansprüche

1. Verfahren zur Steuerung eines stufenlosen Getriebes (2), das vorzugsweise elektrohydraulisch betätigt wird, eines angetriebenen Kraftfahrzeugs, dessen als Brennkraftmaschine (4) ausgeführter Motor mittels eines Leistungssteuerorgans, vorzugsweise eines Fahrpedals oder einer Drosselklappe, beeinflußbar ist, wobei die Übersetzung (ue) des Getriebes (2) mittelbar über wenigstens eine Steuerkennlinie (RKLj) wenigstens in Abhängigkeit von der Stellung des Leistungssteuerorganes (alpha(t)) und der Motordrehzahl (nmot(t)) selbsttätig eingestellt wird, **dadurch gekennzeichnet**, daß eine Vergrößerung der Übersetzung (ue) mit einer relativ langsamen Geschwindigkeit (cg5) erfolgt, wenn sowohl

- eine Betriebsbremse des Kraftfahrzeugs betätigt ist (Bremssignal b = 1) oder alternativ oder ergänzend hierzu die zeitliche Änderung der Fahrgeschwindigkeit (dv(t)-/dt) kleiner als ein erster negativer Längsbeschleunigungs- Grenzwert (albg-(ue, nmot, t), albg(ue, nmot, t)<0) ist, als auch
- eine mittels eines Querbeschleunigungssensors (16) erfaßte Querbeschleunigung (aq(t)) unterhalb einer ersten bestimmten Querbeschleunigungs- Grenzlinie (aqg1-(v(t))) liegt, als auch
- die zeitliche Änderung der Fahrgeschwindigkeit (dv(t)/dt) größer als ein zweiter negativer Längsbeschleunigungs-Grenzwert (albbg(nmot, ue, SK(t), t) = k-(ue, SK(t)) • albg(ue, nmot, t)<0 ist, als auch
- die Fahrgeschwindigkeits (v(t)) kleiner als ein Fahrgeschwindigkeits- Grenzwert (vg-(ue, SK(t))) ist.

2. Verfahren nach Anspruch 1, **dadurch gekennzeichnet**, daß die Vergrößerung der Übersetzung nur dann erfolgt, wenn eine zeitliche Änderung (dalpha(t)/dt) der Stellung des Leistungssteuerorganes (alpha(t)) einen negativen Grenzwert (-alphag) unterschreitet und Schubbetrieb erkannt wird, und solange nach Erkennen von Zugbetrieb ein erster Zeitraum (T1-(SK(t))) noch nicht abgelaufen ist.

3. Verfahren nach wenigstens einem der Ansprüche 1 oder 2, **dadurch gekennzeichnet**, daß Schubbetrieb erkannt wird, wenn die Stellung des Leistungssteuerorganes (alpha(t)) unter eine motordrehzahlabhängige Grenzkennlinie (azsg(nmot)) fällt.

4. Verfahren nach wenigstens einem der Ansprüche 1, 2 oder 3, **dadurch gekennzeichnet,** daß Zugbetrieb erkannt wird, wenn sowohl die Stellung des Leistungssteuerorganes (alpha(t)) die motordrehzahlabhängige Grenzkennlinie azsg(nmot) überschreitet, als auch die zeitliche Änderung der Fahrgeschwindigkeit (dv(t)/dt) positive Werte annimmt.

5. Verfahren nach wenigstens einem der vorangehenden Ansprüche, **dadurch gekennzeichnet,** daß die Vergrößerung der Übersetzung (ue(t)) bis zu demjenigen Wert der Übersetzung (ue), der beim augenblicklichen Betriebspunkt in der augenblicklich eingestellten Steuerkennlinie zulässig ist, erfolgt.

6. Verfahren nach wenigstens einem der vorangehenden Ansprüche, **dadurch gekennzeichnet**, daß die erste Querbeschleunigungs-Grenzlinie (aqg1(v(t))) von der Fahrgeschwindigkeit (v(t)) des Kraftfahrzeugs abhängt.

7. Verfahren nach wenigstens einem der vorangehenden Ansprüche, **dadurch gekennzeichnet**, daß der erste negative Längsbeschleunigungs- Grenzwert (albg(ue, nmot, t)) von den augenblicklichen Werten der eingestellten Übersetzung (ue) und der Motordrehzahl (nmot(t)) abhängig ist und der Längsbeschleunigung (dv/dt; Verzögerung) des in definiertem Zustand auf ebener Fahrbahn rollenden Kraftfahrzeugs bei geschlossenem Leistungssteuerorgan (alpha = 0) und bei den jeweiligen Wertepaaren der augenblicklich eingestellten Übersetzung (ue) und der Motordrehzahl (nmot) entspricht.

8. Verfahren nach Anspruch 7, **dadurch gekennzeichnet**, daß der erste negative Längsbeschleunigungs- Grenzwert (albg(ue, nmot, t)) über ein erstes Kennfeld (ALB(ue, nmot)) aus den Augenblickswerten der Übersetzung (ue(t)) und der Motordrehzahl (nmot(t)) ermittelt wird.

9. Verfahren nach Anspruch 7 oder 8, **dadurch gekennzeichnet**, daß der zweite negative Längsbeschleunigungs- Grenzwert (albbg(nmot, ue, SK(t), t) = k(ue, SK(t))•albg(ue, nmot, t)) gemäß einem Produkt aus einem übersetzungsabhängigen Faktor (k(ue, SK(t))) und dem augenblicklichen Wert des ersten negativen Längsbeschleunigungs- Grenzwerts (albg(ue, nmot, t)) bestimmt wird.

10. Verfahren nach Anspruch 9, **dadurch gekennzeichnet**, daß der übersetzungsabhängige Faktor (k(ue, SK(t))) über ein zweites Kennfeld (k(ue, SK(t)) = F(ue, SK(t))) aus der augenblicklichen Übersetzung (ue) ermittelt wird.

11. Verfahren nach wenigstens einem der vorangehenden Ansprüche, **dadurch gekennzeichnet**, daß der Fahrgeschwindigkeits Grenzwert (vg(ue, Sk(t), t))) wenigstens von der augenblicklich eingestellten Übersetzung (ue) abhängt.

12. Verfahren nach wenigstens einem der vorangehenden Ansprüche, **dadurch gekennzeichnet**, daß die Übersetzung (ue) zumindest solange festgehalten wird, wie der Betrag der Querbeschleunigung (⌐aq(t)⌐) eine zweite Querbeschleunigungs- Grenzlinie (aqg2(v(t))) überschreitet, bzw. solange nach Unterschreiten der zweiten Querbeschleunigungs- Grenzlinie (aqg2(v(t))) ein dritter Zeitraum (T3(SK(t))) noch nicht verstrichen ist.

13. Verfahren nach wenigstens einem der vorangehenden Ansprüche 1 - 11, **dadurch gekennzeichnet**, daß die Übersetzung (ue) zumindest solange mit einer sechsten bestimmten endlichen und relativ langsamen Geschwindigkeit (sechste zeitliche Änderung der Übersetzung ck6 = due/dt = f(SK(t))) bis zu demjenigen Wert der Übersetzung (ue), der zum Erreichen des im augenblicklichen Betriebspunkt des Kraftfahrzeugs (alpha(t), v(t), nmot(t), t) in der augenblicklich eingestellten Steuerkennlinie (RKLj) vorgesehenen Motordrehzahl- Sollwerts (nmots(t)) erforderlich ist, verstellt wird, wie der Betrag der Querbeschleunigung (⌐aq(t)⌐) die zweite Querbeschleunigungs- Grenzlinie (aqg2(v(t))) überschreitet, bzw. solange nach Unterschreiten der zweiten Querbeschleunigungs- Grenzlinie (aqg2(v(t))) ein vierter Zeitraum (T4(SK(t))) noch nicht verstrichen ist.

14. Verfahren nach Anspruch 12 oder 13, **dadurch gekennzeichnet**, daß die nach Ablauf des dritten Zeitraums (T3(SK(t))) oder vierten Zeitraums (T4(SK(t))) eingeleitete Verkleinerung der Übersetzung (ue) mit einer siebten bestimmten endlichen und relativ langsamen Geschwindigkeit (siebte zeitliche Änderung der Übersetzung ck7 = due/dt = f(SK(t))) bis zu demjenigen Wert der Übersetzung (ue) erfolgt, der zum Erreichen des beim augenblicklichen Betriebspunkt im augenblicklich eingestellten Übersetzungskennfeld vorgesehenen Motordrehzahl- Sollwerts (nmots(t)) erforderlich ist.

15. Verfahren nach Anspruch 13 oder 14, **dadurch gekennzeichnet**, daß der Betrag der sechsten Geschwindigkeit (zeitliche Änderung der Übersetzung ck6 = due/dt) kleiner als der Betrag der siebten Geschwindigkeit (zeitliche Änderung der Übersetzung ck7 = due/dt) ist.

16. Verfahren nach Anspruch 15, **dadurch gekennzeichnet**, daß der Betrag der siebten Geschwindigkeit (⌐ck7⌐) (Betrag der zeitlichen Änderung der Übersetzung ⌐ck7⌐ = ⌐due/dt⌐) kleiner als die maximal mögliche Verstellgeschwindigkeit der Übersetzung des Getriebes ist.

17. Verfahren nach wenigstens einem der Ansprüche 1-11, **dadurch gekennzeichnet**, daß, solange der Betrag ($|aq(t)|$) der Querbeschleunigung (aq(t)) die zweite Querbeschleunigungs-Grenzlinie (aqg2(v(t))) überschreitet, bzw. solange nach Unterschreiten der zweiten Querbeschleunigungs- Grenzlinie (aqg2(v(t))) der vierte Zeitraum noch nicht verstrichen ist, die Übersetzung (ue) des Getriebes derart eingestellt wird, daß die Motordrehzahl (nmot(t)) konstant gehalten wird oder daß sich die Motordrehzahl (nmot(t)) mit einer achten bestimmten Geschwindigkeit (nk8(SK(t))) (achte zeitliche Änderung nk8 = dnmot/dt = f(SK(t) der Motordrehzahl nmot(t)) vermindert.

18. Verfahren nach Anspruch 17, **dadurch gekennzeichnet**, daß die Übersetzung (ue) konstant gehalten wird, sobald die Motordrehzahl (nmot(t)) denjenigen Wert des Motordrehzahl-Sollwerts (nmots(t)) erreicht hat, der im augenblicklichen Betriebspunkt des Kraftfahrzeugs in der augenblicklich eingestellten Steuerkennlinie (RKLj) vorgesehen ist.

19. Verfahren nach wenigstens einem der vorangehenden Ansprüche, **dadurch gekennzeichne**t, daß eine Verstellung der Übersetzung (ue) vermieden wird und/oder die Zeiträume (T1(SK(t)), T2(SK(t)), T3(SK(t)), T4(SK(t))) zu Null gesetzt werden, sofern der Betrag der Querbeschleunigung ($|aq(t)|$) die von der Fahrgeschwindigkeit (v(t)) abhängige erste Querbeschleunigungs- Grenzlinie (aqg1(v(t))) überschreitet, bzw. solange nach Unterschreiten der ersten Querbeschleunigungs- Grenzlinie (aqg1(v(t))) ein fünfter Zeitraum (T5(SK(t))) noch nicht verstrichen ist.

20. Verfahren nach wenigstens einem der vorangehenden Ansprüche, **dadurch gekennzeichnet**, daß eine Vergrößerung der Übersetzung vermieden wird und/oder die Zeiträume (T1(SK(t)), T2(SK(t)), T3(SK(t)) T4(SK(t)), T5(SK(t))) zu Null gesetzt werden, sofern an wenigstens einem der Räder des Kraftfahrzeugs übermäßiger Radschlupf auftritt oder der Kraftschluß zwischen wenigstens einem Rad des Kraftfahrzeugs und der befahrenen Fahrbahn unterbrochen ist.

21. Verfahren nach wenigstens einem der Ansprüche 1 bis 19, dadurch gekennzeichnet, daß eine Vergrößerung der Übersetzung nur dann zugelassen wird, wenn eine Differenzgeschwindigkeit (Dv(t) = vref(t)-v(t)) zwischen einer Geschwindigkeit (vref(t)) einer nicht angetriebenen Achse und der an einer angetriebenen Achse erfaßten Fahrgeschwindigkeit (v(t)) einen zulässigen Differenzgeschwindigkeitswert (Dvzul(SK(t))) nicht überschreitet.

22. Verfahren nach Anspruch 21, dadurch gekennzeichnet, daß bei Überschreiten des zulässigen Differenzgeschwindigkeitswerts (Dvzul(SK(t)))
   - eine Wandlerüberbrückungskupplung eines mit einem Drehmomentwandler ausgestatteten Getriebes geöffnet wird,
   - eine Haltezeit (Th(SK(t))) gesetzt wird, während der eine Vergrößerung der Übersetzung (ue) nicht unterbunden werden kann,
   - die eingestellte Übersetzung (ue) zumindest bis zu einem zulässigen Wert verkleinert wird und
   - eine Vergrößerung der Übersetzung (ue) verhindert wird,

wobei diese Funktionen wieder zurückgesetzt werden, wenn Zugbetrieb erkannt wird und positive Werte der zeitlichen Änderung der Fahrgeschwindigkeit (dv(t)/dt) vorliegen.

23. Verfahren nach wenigstens einem der vorangehenden Ansprüche, **dadurch gekennzeichnet**, daß wenigstens einer der Zeiträume (T1(SK(t)), T2(SK(t)), T3(SK(t)), T4(SK(t), T5(SK(t)), Th(SK(t))) oder wenigstens der Fahrgeschwindigkeits- Grenzwert (vg(ue, Sk(t), t) oder der übersetzungsabhängige Faktor (k(ue, SK(t))) oder wenigstens die erste, zweite, dritte, vierte, fünfte, sechste, siebte oder achte Geschwindigkeit (ck1, nk2, ck3, nk4, cg5, ck6, ck7, nk8) zur Vergrößerung oder Verkleinerung der Übersetzung (ue(t)) beziehungsweise der Motordrehzahl (nmot(t)) oder dem zulässigen Differenzgeschwindigkeitswert (Dvzul(SK(t))) willkürlich einstellbar ist bzw. sind und vorzugsweise zusammen mit einer Einstellung der Steuerkennlinien (RKLj) (verbrauchsoptimiertes Fahrprogramm, Steuerkennlinie RKL1; leistungsoptimiertes Fahrprogramm, Steuerkennlinie RKL5) derart eingestellt werden, daß bei mehr leistungoptimierten Fahrprogrammen (Steuerkennlinie RKL5) die Zeiträume (T1(SK(t)), T2(SK(t)), T3(SK(t)), T4(SK(t)), T5(SK(t))), die fünfte Geschwindigkeit (cg5) und der Grenzwert (vg(g, SK(t), t)) größer werden, und die Haltezeit (Th(SK(t))), die Geschwindigkeiten (ck1, nk2, ck3, nk4, ck6, ck7 und nk8), der gangstufenabhängige Faktor (k(g-1, SK(t))) und der zulässige Differenzgeschwindigkeitswert (Dvzul(SK(t))) kleiner werden.

24. Verfahren nach wenigstens einem der vorangehenden Ansprüche, **dadurch gekennzeichnet**, daß wenigstens einer der Zeiträume (T1-

(SK(t)), T2(SK(t)), T3(SK(t)), T4(SK(t)), T5(SK-(t)), Th(SK(t))) oder wenigstens der Fahrgeschwindigkeits- Grenzwert (vg(ue, Sk(t), t) oder der übersetzungsabhängige Faktor (k(ue, SK-(t))) oder wenigstens die erste, zweite, dritte, vierte, fünfte, sechste, siebte oder achte Geschwindigkeit (ck1, nk2, ck3, nk4, cg5, ck6, ck7, nk8) zur Verkleinerung oder Vergrößerung der Übersetzung (ue(t)) beziehungsweise der Motordrehzahl (nmot(t)) oder der zulässige Differenzgeschwindigkeitswert (Dvzul(SK(t))) von einer den Fahrstil des Fahrers oder dessen verkehrssituationsbedingtes Handeln in Bezug auf die Steuerung des Kraftfahrzeugs längerfristig bewertenden Fahraktivität (SK(t)) abhängig sind und mit wachsender, mehr leistungsorientierter Fahraktivität (SK(t)) die Zeiträume (T1-(SK(t)), T2(SK(t)), T3(SK(t)), T4(SK(t)), T5(SK-(t))), die fünfte Geschwindigkeit (cg5) und der Grenzwert (vg(g, SK(t), t)) größer und die Haltezeit (Th(SK(t))), die Geschwindigkeiten (ck1, nk2, ck3, nk4, ck6, ck7 und nk8), der gangstufenabhängige Faktor (k(g-1, SK(t))) und der zulässige Differenzgeschwindigkeitswert (Dvzul(SK(t))) kleiner werden.

25. Verfahren nach Anspruch 24, **dadurch gekennzeichnet**, daß die Fahraktivität (SK(t)) durch eine den Fahrstil des Fahrers oder dessen verkehrsituationsbedingtes Handeln in Bezug auf die Steuerung des Kraftfahrzeugs längerfristig bewertenden funktionellen Zusammenhang (gleitende Mittelwertbildung) aus aktuellen und vergangenen Werten einer einzigen Betriebskenngröße oder einer zu einer einzigen aus mehreren Betriebskenngrößen eines Kraftfahrzeugs zusammengesetzten Größe ermittelt wird.

**Claims**

1. A method of controlling a continuously variable transmission (2), which is preferably operated electro-hydraulically, of a driven motor vehicle of which the engine, designed as an internal combustion engine (4), may be influenced by means of a power control means, preferably an accelerator pedal or a throttle valve, wherein the gear ratio (ue) of the transmission (2) is automatically set indirectly by means of at least one control characteristic (RKLj) at least in dependence on the position of the power control means (alpha(t)) and the engine speed (nmot(t)), characterized in that the gear ratio (ue) is increased at a relatively slow speed (cg5) when both

   - a service brake of the motor vehicle is operated (braking signal b = 1) or alternatively or additionally thereto the change as a function of time of the driving speed (dv(t)/dt) is smaller than a first negative longitudinal acceleration limiting value (albg(ue, nmot,t), albg(ue, nmot, t) < 0), and

   - a transverse acceleration (aq(t)) determined by means of a transverse acceleration sensor (16) lies below a first defined transverse acceleration limiting curve (aqg1(v(t))), and

   - the change as a function of time of the driving speed (dv(t)/dt) is greater than a second negative longitudinal acceleration limiting value (albbg(nmot, ue, SK(t), t) = k(ue, SK(t)) · albg(ue, nmot, t) < 0), and

   - the driving speed (v(t)) is lower than a driving speed limiting value (vg(ue, SK(t))).

2. A method according to claim 1, characterized in that the gear ratio is increased only when a change as a function of time (dalpha(t)/dt) of the position of the power control means (alpha(t)) falls below a negative limiting value (-alphag) and thrust is detected, and as long as a first time period (T1(SK(t))) following the detection of traction has not yet ended.

3. A method according to at least one of claims 1 or 2, characterized in that thrust is detected when the position of the power control means (alpha(t)) falls below an engine speed-dependent limiting characteristic (azsg(nmot)).

4. A method according to at least one of claims 1, 2 or 3, characterized in that traction is detected when both the position of the power control means (alpha(t)) exceeds the engine speed-dependent limiting characteristic azsg-(nmot), and the change as a function of time of the driving speed (dv(t)/dt) assumes positive values.

5. A method according to at least one of the preceding claims, characterized in that the gear ratio (ue(t)) is increased to the value of the gear ratio (ue) which is permissible at the instantaneous operating point on the instantaneously set control characteristic.

6. A method according to at least one of the preceding claims, characterized in that the first transverse acceleration limiting curve (aqg1(v-(t))) is dependent on the driving speed (v(t)) of the motor vehicle.

7. A method according to at least one of the preceding claims, characterized in that the first negative longitudinal acceleration limiting value (albg(ue, nmot, t)) is dependent on the instantaneous values of the set gear ratio (ue) and the engine speed (nmot(t)), and corresponds to the longitudinal acceleration (dv/dt; deceleration) of the motor vehicle rolling in a defined condition along a level road with the power control means closed (alpha = 0) and with the prevailing pairs of values of the instantaneously set gear ratio (ue) and the engine speed (nmot).

8. A method according to claim 7, characterized in that the first negative longitudinal acceleration limiting value (albg(ue, nmot, t)) is obtained by means of a first characteristic graph (ALB(ue,nmot)) from the instantaneous values of the gear ratio (ue(t)) and the engine speed (nmot(t)).

9. A method according to claim 7 or 8, characterized in that the second negative longitudinal acceleration limiting value (albbg(nmot, ue, SK-(t), t) = k(ue, SK(t)) • albg(ue, nmot, t)) is determined in accordance with a product of a gear ratio-dependent factor (k(ue, SK(t))) and the instantaneous value of the first negative longitudinal acceleration limiting value (albg(ue, nmot, t)).

10. A method according to claim 9, characterized in that the gear ratio-dependent factor (k(ue, SK(t))) is obtained by means of a second characteristic graph (k(ue, SK(t)) = F(ue, SK(t))) from the instantaneous gear ratio (ue).

11. A method according to at least one of the preceding claims, characterized in that the driving speed limiting value (vg(ue, SK(t),t))) is dependent at least on the instantaneously set gear ratio (ue).

12. A method according to at least one of the preceding claims, characterized in that the gear ratio (ue) is fixed at least as long as the magnitude of transverse acceleration (¦aq(t)¦) exceeds a second transverse acceleration limiting curve (aqg2(v(t))), or as long as after falling below the second transverse acceleration limiting curve (aqg2(v(t))) a third time period (T3(SK(t))) has not yet elapsed.

13. A method according to at least one of the preceding claims 1 - 11, characterized in that the gear ratio (ue) is adjusted, at a sixth defined, limited and relatively slow speed (sixth change as a function of time of the gear ratio ck6 = due/dt = f(SK(t))), to the value of the gear ratio (ue) which is required to reach the target engine speed value (nmots(t)) provided at the instantaneous operating point of the motor vehicle (alpha(t), v(t), nmot(t), t) on the instantaneously set control characteristic (RKLj) at least as long as the magnitude of transverse acceleration (¦aq(t)¦) exceeds the second transverse acceleration limiting curve (aqg2(v(t))) or as long as after falling below the second transverse acceleration limiting curve (aqg2(v(t))) a fourth time period (T4(SK(t))) has not yet elapsed.

14. A method according to claim 12 or 13, characterized in that the reduction of the gear ratio (ue), initiated after the third time period (T3-(SK(t))) or fourth time period (T4(SK(t))) has ended, is implemented at a seventh defined, limited and relatively slow speed (seventh change as a function of time of the gear ratio ck7 = due/dt = f(SK(t))) until the value of the gear ratio (ue) is reached which is required to achieve the target engine speed value (nmots-(t)) provided at the instantaneous operating point on the instantaneously set gear ratio characteristic graph.

15. A method according to claim 13 or 14, characterized in that the magnitude of the sixth speed (change as a function of time of the gear ratio ck6 = due/dt) is smaller than the magnitude of the seventh speed (change as a function of time of the gear ratio ck7 = due/dt).

16. A method according to claim 15, characterized in that the magnitude of the seventh speed (¦ck7¦) (magnitude of the change as a function of time of the gear ratio ¦ck7¦ = ¦due/dt¦) is smaller than the maximum possible adjustment speed of the gear ratio of the transmission.

17. A method according to at least one of claims 1 - 11, characterized in that as long as the magnitude (¦aq(t)¦) of the transverse acceleration (aq(t)) exceeds the second transverse acceleration limiting curve (aqg2(v(t))), or as long as after falling below the second transverse acceleration limiting curve (aqg2(v(t))) the fourth time period has not yet elapsed, the gear ratio (ue) of the transmission is set in such a way that the engine speed (nmot(t)) is held constant, or that the engine speed (nmot(t)) is reduced at an eighth defined speed (nk8(SK(t)-)) (eighth change as a function of time nk8 = dnmot/dt = f(SK(t) of the engine speed nmot(t)).

**18.** A method according to claim 17, characterized in that the gear ratio (ue) is held constant as soon as the engine speed (nmot(t)) has reached the value of the target engine speed value (nmots(t)) provided at the instantaneous operating point of the motor vehicle on the instantaneously set control characteristic (RKLj).

**19.** A method according to at least one of the preceding claims, characterized in that adjustment of the gear ratio (ue) is avoided and/or the time periods (T1(SK(t)), T2(SK(t)), T3(SK(t)), T4(SK(t))) are set at zero if the magnitude of transverse acceleration (|aq(t)|) exceeds the first transverse acceleration limiting curve (aqg1(v(t))) dependent on the driving speed (v(t)), or as long as after falling below the first transverse acceleration limiting curve (aqg1(v(t))) a fifth time period (T5(SK(t))) has not yet elapsed.

**20.** A method according to at least one of the preceding claims, characterized in that increasing of the gear ratio is avoided and/or the time periods (T1(SK(t)), T2(SK(t)), T3(SK(t)), T4(SK(t)), T5(SK(t))) are set at zero if excessive wheel slip occurs at at least one of the wheels of the motor vehicle or the frictional connection between at least one wheel of the motor vehicle and the road on which it is travelling is interrupted.

**21.** A method according to at least one of claims 1 to 19, characterized in that increasing of the gear ratio is only permitted when a differential speed (Dv(t) = vref(t)-v(t)) between a speed (vref(t)) of a non-driven axle and the driving speed (v(t)) determined on a driven axle does not exceed a permissible differential speed value (Dvzul(SK(t))).

**22.** A method according to claim 21, characterized in that when the permissible differential speed value (Dvzul(SK(t))) is exceeded
- a converter-bridging coupling of a transmission fitted with a torque converter is opened,
- a holding period (Th(SK(t))) is set during which increasing of the gear ratio (ue) cannot be prevented,
- the set gear ratio (ue) is reduced at least to a permissible value, and
- increasing of the gear ratio (ue) is prevented,

these functions being restored again when traction is detected and positive values of the change as a function of time of the driving speed (dv(t)/dt) are present.

**23.** A method according to at least one of the preceding claims, characterized in that at least one of the time periods (T1(SK(t)), T2(SK(t)), T3(SK(t)), T4(SK(t)), T5(SK(t)), Th(SK(t))) or at least the driving speed limiting value (vg(ue, SK(t), t) or the gear ratio-dependent factor (k(ue, SK(t))) or at least the first, second, third, fourth, fifth, sixth, seventh or eighth speed (ck1, nk2, ck3, nk4, cg5, ck6, ck7, nk8) in order to increase or reduce the gear ratio (ue(t)) or the engine speed (nmot(t)) or the permissible differential speed value (Dvzul(SK(t))) can arbitrarily be set, and preferably together with setting of the control characteristics (RKLj) (fuel consumption-optimized driving program, control characteristic RKL1; performance-optimized driving program, control characteristic RKL5) can be set in such a way that with more performance-optimized driving programs (control characteristic RKL5) the time periods (T1(SK(t)), T2(SK(t)), T3(SK(t)), T4(SK(t)), T5(SK(t))), the fifth speed (cg5) and the limiting value (vg(g, SK(t), t)) become greater, and the holding time (Th(SK(t))), the speeds (ck1, nk2, ck3, nk4, ck6, ck7 and nk8), the gear-step-dependent factor (k(g-1, SK(t))) and the permissible differential speed value (Dvzul(SK(t))) become smaller.

**24.** A method according to at least one of the preceding claims, characterized in that at least one of the time periods (T1(SK(t)), T2(SK(t)), T3(SK(t)), T4(SK(t)), T5(SK(t)), Th(SK(t))) or at least the driving speed limiting value (vg(ue, SK(t), t) or the gear ratio-dependent factor (k(ue, SK(t))) or at least the first, second, third, fourth, fifth, sixth, seventh or eighth speed (ck1, nk2, ck3, nk4, cg5, ck6, ck7, nk8) in order to reduce or increase the gear ratio (ue(t)) or the engine speed (nmot(t)) or the permissible differential speed value (Dvzul(SK(t))) are dependent on a driving activity (SK(t)) evaluating over a fairly long period the driving style of the driver or his behaviour conditional on the traffic situation with respect to the control of the motor vehicle, and with increasing, more performance-oriented driving activity (SK(t)), the time periods (T1(SK(t)), T2(SK(t)), T3(SK(t)), T4(SK(t)), T5(SK(t))), the fifth speed (cg5) and the limiting value (vg(g, SK(t), t)) become greater and the holding time (Th(SK(t))), the speeds (ck1, nk2, ck3, nk4, ck6, ck7 and nk8), the gear-step-dependent factor (k(g-1, SK(t))) and the permissible differential speed value (Dvzzul(SK(t))) become smaller.

**25.** A method according to claim 24, characterized in that the driving activity (SK(t)) is obtained by means of a functional interrelation (creation of a sliding median value), evaluating over a fairly long period the driving style of the driver or his behaviour conditional on the traffic situation with respect to the control of the motor vehicle, from current and past values of a single operating parameter or a variable combined into a single value from several operating parameters of a motor vehicle.

## Revendications

**1.** Procédé de commande d'une boîte de vitesses (2) à variation continue, qui est actionnée de préférence électro-hydrauliquement, d'un véhicule automobile dont le moteur, réalisé sous la forme d'un moteur à combustion interne (4), peut être influencé au moyen d'un organe de commande de puissance, de préférence sous la forme d'une pédale d'accélérateur ou d'un papillon des gaz, le rapport (ue) de la boîte de vitesses (2) étant réglé indirectement par l'intermédiaire d'au moins une courbe caractéristique de commande (RKLj) au moins en fonction de la position de l'organe de puissance (alpha(t)) et de la vitesse de rotation du moteur (nmot(t)), caractérisé en ce qu'une augmentation du rapport (ue) s'effectue à une vitesse (cg5) relativement lente, si
- un frein de service du véhicule est actionné (signal de frein b = 1) ou en variante ou en complément, la variation dans le temps de la vitesse de marche (dv(t)/dt) est inférieure à une première valeur limite d'accélération longitudinale négative (albg(ue, nmot, t) < 0), et si
- une accélération transversale (aq(t)), détectée au moyen d'un capteur d'accélération transversale (16), se situe au-dessous d'une première ligne limite d'accélération transversale déterminée (aqg1(v-(t)), et si
- la variation dans le temps de la vitesse de marche (dv(t)/dt) est supérieure à une deuxième valeur limite d'accélération longitudinale négative (albbg(nmot, ue, SK-(t), t) = k(ue, SK(t) • albg(ue, nmot, t) < 0), et si
- la vitesse de marche (v(t)) est inférieure à une valeur limite de vitesse de marche (vg(ue, SK(t))).

**2.** Procédé selon la revendication 1, caractérisé en ce que l'augmentation du rapport ne s'effectue que si une variation dans le temps (dalpha(t)/dt) de la position de l'organe de commande de puissance (alpha(t), reste au-dessous d'une valeur limite négative (-alphag) et si un freinage moteur est détecté et aussi longtemps qu'un premier intervalle de temps (T1(SK(t))) ne s'est pas écoulé après détection d'un fonctionnement en traction.

**3.** Procédé selon l'une au moins des revendications 1 ou 2, caractérisé en ce qu'un freinage moteur est détecté lorsque la position de l'organe de commande de puissance (alpha(t)) passe au-dessous d'une courbe caractéristique limite (azsg(nmot)) dépendant de la vitesse de rotation du moteur.

**4.** Procédé sel on l'une au moins des revendications 1, 2 ou 3, caractérisé en ce que le fonctionnement en traction est détecté lorsque la position de l'organe de commande de puissance (alpha(t)) dépasse la courbe caractéristique limlite (azsg(nmot)) dépendant de la vitesse de rotation du moteur, et si la variation dans le temps de la vitesse de marche (dv(t)/dt) prend des valeurs positives.

**5.** Procédé selon l'une au moins des revendications précédentes caractérisé en ce que l'augmentation du rapport (ue(t)) intervient jusqu'à la valeur du rapport (ue), qui est admise au point de fonctionnement instantané dans la courbe caractéristique de commande réglée dans l'instant.

**6.** Procédé selon l'une au moins des revendications précédentes, caractérisé en ce que la première ligne limite d'accélération transversale (aqg1(v(t))) dépend de la vitesse de marche (v(t)) du véhicule.

**7.** Procédé selon l'une au moins des revendications précédentes caractérisé en ce que la première valeur limite d'accélération longitudinale négative (albg(ue, nmot, t)) dépend des valeurs instantanées du rapport (ue) réglé et de la vitesse de rotation du moteur (nmot(t)) et correspond à l'accélération longitudinale (dv/dt ; temporisation) du véhicule roulant dans un état défini sur une chaussée plane, alors que l'organe de commande de puissance est fermé (alpha = 0) et pour les paires de valeurs respectives du rapport (ue) réglé et de la vitesse de rotation du moteur (nmot).

**8.** Procédé selon la revendication 7, caractérisé en ce que la première valeur limite d'accélération longitudinale négative (albg(ue, nmot, t)) est déterminée par un premier champ caractéristique (ALB(ue, nmot)) à partir des valeurs instantanées du rapport (ue(t)) et de la vitesse de rotation du moteur (nmot(t)).

9. Procédé selon la revendication 7 ou 8, caractérisé en ce que la deuxième valeur limite d'accélération longitudinale négative (albbg(nmot, ue, SK(t), t) = k(ue, SK(t) • albg(ue, nmot, t)) est déterminée selon le produit d'un facteur dépendant du rapport (k(ue, SK(t)) et de la valeur instantanée de la première valeur limite négative d'accélération longitudinale (albg(ue, nmot, t).

10. Procédé selon la revendication 9, caractérisé en ce que le facteur dépendant du rapport (k-(ue, SK(t))) est déterminé pour un deuxième champ caractéristique (k(ue, SK(t)) = F(ue, SK(t))), à partir du rapport instantané (ue).

11. Procédé selon l'une au moins des revendications précédentes, caractérisé en ce que la valeur limite de la vitesse de marche (vg(ue, Sk(t), t)) dépend au moins du rapport (ue) réglé dans l'instant.

12. Procédé selon l'une au moins des revendications précédentes, caractérisé en ce que le rapport (ue) est fixé au moins tant que la valeur de l'accélération transversale (¦aq(t)¦) dépasse une deuxième ligne limite d'accélération transversale (aqg2(v(t))), ou aussi longtemps qu'après dépassement de la deuxième ligne limite d'accélération transversale (aqg2(v(t))), un troisième intervalle de temps (T3(SK(t))) ne s'est pas encore écoulé.

13. Procédé selon l'une au moins des revendications précédentes 1 à 11, caractérisé en ce que le rapport (ue) est modifié avec une sixième vitesse finie déterminée et relativement lente (sixième variation dans le temps du rapport ck6 = due/dt = f(SK(t))), jusqu'à la valeur du rapport (ue), qui est nécessaire pour obtenir la vitesse de rotation de consigne du moteur (nmots(t)), prévue au point de fonctionnement instantané du véhicule (alpha(t), v(t), nmot(t), t) dans la courbe caractéristique de commande (RKLj) réglée dans l'instant, au moins tant que la valeur de l'accélération transversale (¦aq(t)¦) dépasse la deuxième ligne caractéristique d'accélération transversale (aqg2(v(t))), ou aussi longtemps qu'après dépassement de la deuxième ligne limite d'accélération transversale (aqg2(v(t))), un quatrième intervalle de temps (T4(SK(t))) ne s'est pas encore écoulé.

14. Procédé selon les revendications 12 ou 13, caractérisé en ce que la réduction du rapport (ue), amorcée après expiration du troisième intervalle de temps (T3(SK(t))) ou du quatrième intervalle de temps (T4(SK(t))), s'effectue à une septième vitesse finie déterminée et relativement lente (septième variation dans le temps du rapport ck7 = due/dt = f((Sk(t))), jusqu'à la valeur du rapport (ue), qui est nécessaire pour obtenir la vitesse de rotation de consigne du moteur (nmots(t)), prévue pour le point de fonctionnement instantané dans la courbe caractéristique de commande réglée dans l'instant.

15. Procédé selon les revendications 13 ou 14, caractérisé en ce que la valeur de la sixième vitesse (variation dans le temps du rapport ck6 = due/dt), est inférieure à la valeur de la septième vitesse (variation dans le temps du rapport ck7 = due/dt).

16. Procédé selon les revendications 15, caractérisé en ce que la valeur de la septième vitesse (¦ck7¦) (valeur de la variation dans le temps du rapport ¦ck7¦ = ¦due/dt¦) est inférieure à la vitesse de modification maximale possible du rapport de la boîte de vitesses.

17. Procédé selon l'une au moins des revendications 1 à 11, caractérisé en ce qu'aussi longtemps que la valeur absolue (¦aq(t)¦) de l'accélération transversale (aq(t)) dépasse la deuxième ligne limite d'accélération transversale (aqg2(v(t))), ou aussi longtemps qu'après dépassement de la deuxième ligne limite d'accélération transversale (aqg2(v(t))), le quatrième intervalle de temps ne s'est pas encore écoulé, le rapport (ue) de la boîte de vitesses est réglé de manière que la vitesse de rotation du moteur (nmot(t)) soit maintenue constante ou que la vitesse de rotation du moteur (nmot(t)) soit réduite à une huitième vitesse déterminée (nk8(SK(t))) (huitième variation dans le temps nk8 = dnmot/dt = f(SK(t) de la vitesse de rotation du moteur (nmot(t)).

18. Procédé selon la revendication 17, caractérisé en ce que le rapport (ue) est maintenu constant dès que la vitesse de rotation du moteur (nmot(t)) a atteint la vitesse de rotation de consigne du moteur (nmots(t)), qui est prévue au point de fonctionnement instantané du véhicule dans la courbe caractéristique de commande (RKLj) réglée dans l'instant.

19. Procédé sel on l'une au moins des revendications précédentes, caractérisé en ce qu'une modification du rapport (ue) est évitée et/ou les intervalles de temps ((T1(SK(t)), (T2(SK(t)), (T3(SK(t)), (T(SK(t))) sont mis à zéro, si la valeur absolue de l'accélération transversale (¦aq(t)¦) dépasse la première ligne limite d'accélération transversale (aqg1(v(t))) dépendant de la vitesse de marche (v(t)), ou aussi longtemps qu'après dépassement de la première ligne limite d'accélération transversale (aqg1(v-(t))), un cinquième intervalle de temps (T5(SK-(t))) ne s'est pas encore écoulé.

20. Procédé sel on l'une au moins des revendications précédentes, caractérisé en ce qu'une augmentation du rapport est évitée et/ou les intervalles de temps (T1(SK(t)), T2(SK(t)), T3-(SK(t)), T4(SK(t)), T5(SK(t))) sont annulés, si sur au moins l'une des roues de véhicule il se produit un glissement exagéré ou si l'adhérence par force entre au moins une roue du véhicule et la chaussée est interrompue.

21. Procédé sel on l'une au moins des revendications 1 à 19, caractérisé en ce que qu'une augmentation du rapport n'est autorisée que si une vitesse différentielle (Dv(t) = vref(t)-v(t)) entre une vitesse (vref(t)) d'un essieu non moteur et la vitesse de marche (v(t)), détectée sur un essieu moteur, ne dépasse pas une valeur de vitesse différentielle admissible (Dvzul(SK-(t))).

22. Procédé selon la revendication 21, caractérisé en ce qu'en cas de dépassement de la valeur de la vitesse différentielle admissible (Dvzul-(Sk(t)))

   - un accouplement de pontage de convertisseur d'une boîte de vitesses équipée d'un convertisseur de couple de rotation est ouvert,
   - un temps de maintien (Th(Sk(t))) est fixé, pendant lequel une augmentation du rapport (ue) ne peut être interdite,
   - le rapport (ue) réglé est réduit au moins jusqu'à une valeur admissible et
   - une augmentation du rapport (ue) est empêchée,

   ces fonctions étant replacées dans leur état initial, lorsqu'un fonctionnement en traction est détecté et lorsqu'on est en présence de valeurs positives de la variation dans le temps de la vitesse de marche (dv(t)/dt).

23. Procédé sel on l'une au moins des revendications précédentes, caractérisé en ce qu'au moins l'un des intervalles (T1(SK(t)), T2(SK(t)), T3(SK(t)), T4(SK(t)), T5(SK(t)), Th(SK(t))) ou au moins la valeur limite de la vitesse de marche (vg(ue, SK(t), t) ou le facteur (k(ue, SK(t)) dépendant du rapport) ou au moins la première, la deuxième, la troisième, la quatrième, la cinquième, la sixième, la septième ou la huitième vitesse (ck1, nk2, ck3, nk4, cg5, ck6, ck7, nk8) est ou sont volontairement réglable(s) pour augmenter ou réduire le rapport (ue(t)), ou la vitesse de rotation du moteur (nmot(t)) ou la valeur de la vitesse différentielle admissible (Dvzul(SK(t))) et sont de préférence réglées conjointement avec un réglage des courbes caractéristiques de commande (RKLj) (programme de marche optimisé en consommation, courbe caractéristique de commande RKL1, programme de marche optimisé en puissance, courbe caractéristique de commande RKL5), de manière que dans le cas de plusieurs programmes de marche optimisés en puissance (caractéristique de commande RKL5) les intervalles de temps (T1(SK(t)), T2-(SK(t)), T3(SK(t)), T4(SK(t)), T5(SK(t))), la cinquième vitesse (cg5) et la valeur limite (vg(g, SK(t), t)) augmentent et le temps de maintien (Th(SK(t))), les vitesses (ck1, nk2, ck3, ck4, ck6, ck7 et nk8), le facteur (k(g-1, SK(t))) dépendant des crans de marche et la valeur de la vitesse différentielle admissible (Dvzul(SK(t-)) diminuent.

24. Procédé selon l'une au moins des revendications précédentes, caractérisé en ce qu'au moins l'un des intervalles de temps (T1(SK(t)), T2(SK(t)), T3(SK(t)), T4(SK(t)), T5(SK(t)), Th-(SK(t))) ou au moins la valeur limite de la vitesse de marche (vg(ue, SK(t), t) ou le facteur (k(ue, SK(t))) dépendant du rapport ou au moins la première, la deuxième, la troisième, la quatrième, la cinquième, la sixième vitesses (ck1, nk2, ck3, nk4, cg5, ck6, ck7, nk8) est ou sont volontairement réglable(s) pour augmenter ou réduire le rapport (ue(t)), ou la vitesse de rotation du moteur (nmot(t)) ou la valeur de la vitesse différentielle admissible (Dvzul(SK(t))) dépendent d'une activité de conduite (SK(t)) évaluant à long terme le style de conduite du conducteur ou son comportement dû aux conditions de circulation, en ce qui concerne la commande du véhicule, et avec une activité de conduite (SK(t)) croissante, plus orientée vers la puissance, les intervalles de temps (T1(SK-(t)), T2(SK(t)), T3(SK(t)), T4(SK(t)), T5(SK(t))), la cinquième vitesse (cg5) et la valeur limite (vg(g, SK(t), t)) augmentent et le temps de maintien (Th(SK(t))), les vitesses (ck1, nk2, ck3, nk4, ck6, ck7 et nk8), le facteur (k(g-1, SK(t))) dépendant du cran de marche et la valeur de la vitesse différentielle admissible (Dvzul(SK(t))) diminuent.

**25.** Procédé selon la revendication 24, caractérisé en ce que l'activité de conduite (SK(t)) est déterminée par une relation fonctionnelle (formation d'une valeur moyenne glissante) évaluant à long terme le style de conduite du conducteur ou son comportement dû aux conditions de circulation, en ce qui concerne la commande du véhicule, à partir de valeurs actuelles et passées d'une seule grandeur caractéristique de fonctionnement ou d'une grandeur constituant une grandeur unique composée de plusieurs grandeurs caractéristiques de fonctionnement d'un véhicule.

FIG.1

FIG.2

EP 0 589 916 B1

FIG.3

EP 0 589 916 B1

aq [g (9,81m/sec)]

0,4

aqg 1

0,3

0,2

aqg 2

0,1

FIG.4

50    100    150    200    v [km/h]

[s]    T1(SK(t)), T2 (SK(t)), T3 (SK(t)), T4 (SK(t)),
       T5(SK(t)), Th(SK(t))

3

T1,T2,T3,T4,T5

2

Th

1

FIG.7

SKmin                    SKmax    SK(t)

22

FIG.5

EP 0 589 916 B1

FIG. 6

EP 0 589 916 B1